# EUROPÄISCHE PATENTANMELDUNG

(11) **EP 2 048 834 A1**
(43) Veröffentlichungstag der Anmeldung: **15.04.2009**
(21) Anmeldenummer: 08001228.9
(22) Anmeldetag: 23.01.2008
(51) Int. Cl.: H04L 12/56

(54) **Verfahren, Netzwerke und Netzknoten zur Auswahl einer Route**

(30) Priorität: 08.10.2007 EP 07019648
(71) Anmelder: SIEMENS AKTIENGESELLSCHAFT, 80333 München (DE)
(72) Erfinder: Hollick, Matthias, 64289 Darmstadt (DE); Mogre, Parag Sudhir, 64289 Darmstadt (DE); Schingenschlögl, Christian Dr., 85640 Putzbrunn (DE); Ziller, Andreas, 81827 München (DE)

(57) **Zusammenfassung**

Die Erfindung betrifft Verfahren, Netzwerk und Netzknoten zum Aufbau einer Route in einem paketvermittelten Netzwerk aus datentechnisch miteinander verbundenen Netzknoten, die einen Startknoten über Zwischenknoten mit einem Zielknoten verbindet, bei denen eine Route abstanskorreliert zu einer bereits im Netzwerk aufgebauten Referenzroute aufgebaut wird.

## Beschreibung

Die Erfindung liegt auf dem Gebiet der Netzwerktechnik und betrifft Verfahren, Netzwerke und Netzknoten zum Aufbau einer zu einer Referenzroute abstandskorrelierten Route in einem Netzwerk.

Netzwerke ermöglichen eine Übermittlung von Nachrichten zwischen datentechnisch miteinander verbunden Netzknoten. Um in paketvermittelten Netzwerken die Vorteile einer verbindungsorientierten Datenübertragung zu nutzen, ist es bekannt, Datenübertragungsverfahren einzusetzen, bei denen eine logische Route zur Nachrichtenübermittlung zwischen einem Start- und Zielknoten des Netzwerks dynamisch aufgebaut wird. Hierbei besteht die Möglichkeit, eine Route so einzurichten, dass bestimmte Dienstgütemerkmale erfüllt sind, zu welchem Zweck oftmals auch redundante Ersatz- bzw. Parallelrouten aufgebaut werden.

Insbesondere in einem drahtlosen Netzwerk kann das Problem auftreten, dass sich lokale Interferenzen (Störungen) in Radioreichweite einzelner Netzknoten auf die Dienstgüte all jener Routen auswirken, die durch den gestörten Bereich laufen. Dies kann eine verminderte Ausfallsicherheit und längere Reaktionszeiten im Fehlerfall zur Folge haben, wenn hierdurch neben einer aktiven Route auch deren Ersatzroute beeinträchtigt ist.

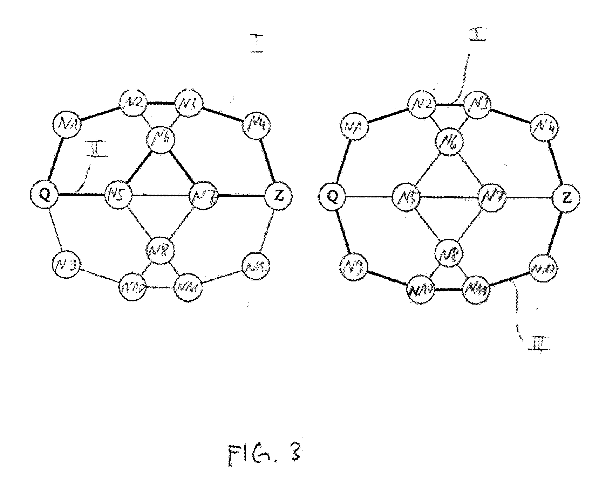

Dies wird anhand der Figuren 3 bis 5, worin drahtlose Multi-Hop-Netzwerke mit redundanten Parallelrouten dargestellt sind, näher erläutert. In den Figuren sind die Netzknoten als Kreise und jeweils zwei benachbarte Netzknoten datentechnisch miteinander verbindende (Punkt-zu-Punkt-) Datenlinks als Linien dargestellt. Zu einer Route (Ende-zu-Ende-Verbindung) gehörende Datenlinks sind als verdickte Linien eingezeichnet.

Sei zunächst Fig. 3 betrachtet. In Fig. 3 ist in zwei verschiedenen Darstellungen ein selbes Netzwerk mit jeweils zwei parallelen Routen zwischen einem Startknoten Q und einem Zielknoten Z dargestellt. Zwischenknoten sind mit N₁...N₁₂ bezeichnet.

In der linken Darstellung von Fig. 3 ist eine die Netzknoten Q, N₁, N₂, N₃, N₄ und Z in dieser Reihenfolge enthaltende erste Route I und eine hierzu parallele, die Netzknoten Q, N₅, N₆, N₇ und Z in dieser Reihenfolge enthaltende, zweite Route II eingerichtet. Die beiden Routen haben einen geringen Abstand voneinander, d. h. sie weisen eine relativ große Abstandskorrelation auf, so dass lokale Störungen, die durch einen Netzknoten in einer der beiden Routen verursacht werden, stets auch Auswirkungen auf die andere Route haben.

In der rechten Darstellung von Fig. 3 ist Route I und eine hierzu parallele, die Netzknoten Q, N₉, N₁₀, N₁₁, N₁₂ und Z in dieser Reihenfolge enthaltende, dritte Route III eingerichtet. Diese beiden Routen haben einen großen Abstand voneinander, d. h. sie weisen eine relativ niedrige Abstandskorrelation auf, so dass lokale Störungen eines Netzknotens lediglich in Nähe des Quell- und Zielknotens Auswirkungen auf die andere Route haben.

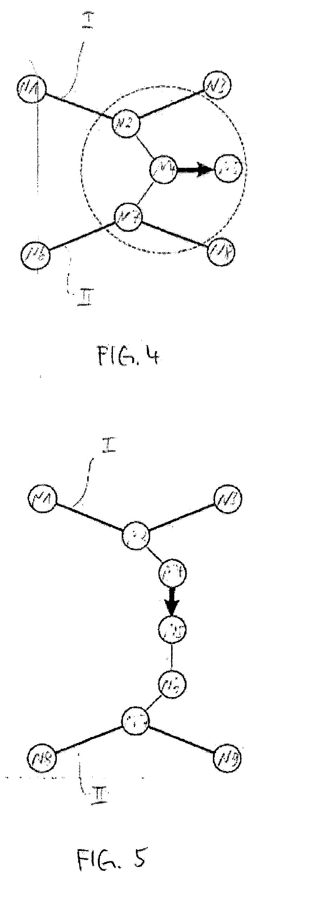

In Fig. 4 und Fig. 5 sind die Auswirkungen einer lokalen Störung durch einen Netzknoten in verschiedenen Netzwerken erläutert.

Sei zunächst Fig. 4 betrachtet. In Fig. 4 ist ein drahtloses Netzwerk mit Netzknoten N₁...N₈ dargestellt. Im Netzwerk sind zwei parallele Routen I, II eingerichtet, wobei eine erste Route I die Netzknoten N₁, N₂ und N₃ in dieser Reihenfolge und eine zweite Route II die Netzknoten N₆, N₇ und N₈ in dieser Reihenfolge umfasst. Route II ist als Ersatz- bzw. Backup-Route für den Versagensfall der aktiven Route I vorgesehen.
Es sind hier lediglich Abschnitte der beiden Routen dargestellt, wobei insbesondere Start- und Zielknoten nicht gezeigt sind.

Im Netzwerk von Fig. 4 gehört der Netzknoten N₄ keiner der beiden Routen an. Wie durch einen Pfeil in Fig. 4 veranschaulicht ist, sendet der Netzknoten N₄ Daten an den Netzknoten N₅, der ebenfalls keiner der beiden Routen angehört. Wenn eine lokale Störung des Netzknotens N₄ auftritt, welche dazu führt, dass bei der Kommunikation zwischen dem Netzknoten N₄ und dem Netzknoten N₅ sämtliche verfügbare Bandbreite beansprucht wird, hat dies zur Folge, dass weder dem zu Netzknoten N₄ unmittelbar benachbarten Netzknoten N₂, welcher zur Route I gehört, noch dem Netzknoten N₇, welcher zur Route II gehört, Bandbreite für eine Datenübertragung zur Verfügung steht. Der Netzknoten N₂ von Route I und der Netzknoten N₇ von Route II sind nur durch den zwischen liegenden Netzknoten N₄, beziehungsweise zwei Netzknoten-Hops (Netzknotensprünge), beziehungsweise zwei Datenlinks voneinander getrennt. Somit wird durch eine lokale Störung des Netzknotens N₄ in beiden Routen eine Datenübertragung beeinträchtigt, so dass weder über Route I noch über ihre Backup-Route eine Datenübermittlung möglich ist. In Fig. 4 ist durch einen gestrichelten Kreis um den Netzknoten N₄ der Bereich der lokalen Störung gekennzeichnet.

In Fig. 5 ist ein drahtloses Netzwerk mit Netzknoten N₁...N₉ dargestellt, wobei eine erste Route I mit den Netzknoten N₁, N₂ und N₃ in dieser Reihenfolge und eine hierzu parallele zweite Route II mit den Netzknoten N₈, N₇ und N₉ in dieser Reihenfolge eingerichtet sind. Route II ist als Backup-Route bei einem Ausfall der aktiven Route I vorgesehen. Die drei seriell miteinander verknüpften Netzknoten N₄, N₅, und N₆ gehören keiner der beiden Routen an und trennen die beiden Routen voneinander, so dass die beiden Routen I, II durch mehr als 3 Netzknoten-Hops (hier vier Datenlinks) voneinander getrennt sind.

Wie durch einen Pfeil in Fig. 5 veranschaulicht ist, sendet der Netzknoten N₄ Daten an den Netzknoten N₅, wobei eine lokale Störung des Netzknotens N₄ auftritt, welche dazu führt, dass bei einer Kommunikation zwischen dem Netzknoten N₄ und dem Netzknoten N₅ sämtliche verfügbare Bandbreite beansprucht wird. Da sich die lokale Störung des Netzknotens N₄ lediglich auf den zu Netzknoten N₄ unmittelbar benachbarten Netzknoten N₂ auswirkt, welcher Route I angehört, wird durch eine lokale Störung des Netzknotens N₄ nur Route I beeinträchtigt. Route II, welche mehr als 3 Hops von Route I entfernt ist, wird durch eine lokale Störung des Netzknotens N₄ nicht beeinträchtigt und kann als Backup-Route den Datenverkehr übernehmen.

In verbindungsorientierten paketvermittelten Netzwerken werden bislang eine Vielzahl verschiedener Routingverfahren zum Aufbau redundanter Routen von einem Startknoten zu einem Zielknoten eingesetzt. Diese Verfahren können bezüglich der Eigenschaften der aufgebauten Routen in drei Kategorien eingeordnet werden:

In einer ersten Kategorie werden die Routen hinsichtlich Knotendisjunktheit optimiert. Hierbei können redundante Routen auch gemeinsame Netzknoten haben, wobei sich Probleme durch lokale Interferenzen und ausgefallene Zwischenknoten auf alle aufgebauten Routen auswirken.

In einer zweiten Kategorie werden die Routen nur hinsichtlich Knotendisjunktheit optimiert und sind immer knotendisjunkt. Hierbei können knotendisjunkte Routen auch Netzknoten enthalten, die sich in Funkreichweite von Netzknoten einer jeweils anderen Route befinden. Dies bedeutet, dass Probleme durch lokale Interferenzen bei Netzknoten auf einer Route auch Auswirkungen auf Netzknoten einer anderen Route haben können. Eine lokal auftretende Störung kann somit mehrere Routen beeinträchtigen. Sollte es nicht mehrere knotendisjunkte Routen zwischen einem Startknoten und einem Zielknoten geben, können diese Verfahren nicht mehrere nicht-knotendisjunkte Routen als Alternativen aufbauen.

In einer dritten Kategorie werden die Routen nur hinsichtlich Knotendisjunktheit optimiert und müssen nicht knotendisjunkt sein. Hierbei können knotendisjunkte Routen auch Netzknoten enthalten, die sich in Funkreichweite von Netzknoten einer jeweils anderen Route befinden. Dies bedeutet, dass Probleme durch lokale Interferenzen bei Netzknoten auf einer Route auch Auswirkungen auf Netzknoten anderer Routen haben können. Eine lokal auftretende Störung kann somit mehrere Routen negativ beeinflussen.

Beispielsweise ist in Aura Ganz, Qi Xue "Ad-Hoc QoS on-demand Routing (AQOR) in mobile Ad-Hoc-Networks in Journal of Parallel and Distributed Computing, Volume 63, Seiten 154-165, 2003 ein Routingverfahren beschrieben, bei dem die Qualität der gefundenen Routen berücksichtigt und die endgültige Route entsprechend ihrer Qualität ausgewählt wird. Bei anderen Routingverfahren werden mehrere Routen zwischen Quell- und Zielknoten aufgebaut. So ist in Zhennqiang Ye, Srikanth V. Krishnamurthy, Satish K. Tripathi "A Framework for reliable Routing in mobile Ad-Hoc-Networks" in IEEE INFOCOMM 2003 ein Routingverfahren gezeigt, bei dem die aufgebauten Routen zwingend knotendisjunkt sind. Weiterhin ist in Stephen Mueller, Dipak Ghosal "Analysis of a distributed Algorithm to determine multiple Routes with Path Diversity in Ad-Hoc Networks" in Modelling and Optimization in Mobile, Ad-Hoc and Wireless Networks, Seiten 277-285, April 2005 ein Verfahren beschrieben, bei dem die aufgebauten Routen knotendisjunkt sein können.

Jedoch wurden in keinem der bislang eingesetzten Verfahren für den Aufbau redundanter Routen die Auswirkungen lokaler Störungen von Netzknoten auf die Übertragungseigenschaften der Routen hinreichend berücksichtigt.

Demgegenüber besteht die Aufgabe der vorliegenden Erfindung darin, ein Verfahren zum Aufbau einer Route in einem verbindungsorientierten paketvermittelten Netzwerk zur Verfügung zu stellen, welches es ermöglicht, ein Route so aufzubauen, dass eine Beeinträchtigung redundanter Routen durch eine lokale Störung eines Netzknotens vermieden werden kann.

Diese und weitere Aufgaben werden nach dem Vorschlag der Erfindung durch Verfahren zum Aufbau einer Route sowie zur Durchführung dieser Verfahren geeignet eingerichtete Netzwerke und Netzknoten mit den Merkmalen der unabhängigen Patentansprüche gelöst. Vorteilhafte Ausgestaltungen der Erfindung sind durch die Merkmale der Unteransprüche angegeben.

Es werden zunächst Begriffe definiert, die im Zusammenhang mit der Beschreibung ein bestimmtes Verständnis haben.

### Begriff: "Verbindung"

Eine Verbindung in einem Netzwerk wird eindeutig bestimmt durch:
A) ein 2-Tupel aus den jeweiligen Identifikatoren für Start- und Zielknoten oder
B) ein 3-Tupel aus den jeweiligen Identifikatoren für Startknoten und Zielknoten und Serviceklasse

Die Verwendung eines n-Tupels impliziert, dass jedes Element des Tupels einen eindeutigen Platz hat. Das heißt, in einem 2-Tupel gemäß A) wäre eine Verbindung R1 = (X, Y) nicht identisch zu einer Verbindung R2 = (Y, X).

### Begriff: "Parallelroute"

Alle Routen, die für eine Verbindung zwischen einem selben Quellknoten und einem selben Zielknoten existieren, sind zueinander parallele Routen. Die Gesamtheit aller parallelen Routen sind Parallelrouten. Eine Route die zu einer anderen Route parallel ist, kann als Parallelroute bezeichnet werden. Gleichwertige Begriffe zu Parallelroute sind Alternativroute, Ersatzroute und Backup-Route. Eine Parallelroute wird identifiziert durch ein 4-Tupel der jeweiligen Identifikatoren für Startknoten, Zielknoten, Serviceklasse und Routennummer.

### Begriff: "Korrelation"

Die Korrelation (Korrelationsfaktor) zwischen zwei Routen ist eine Maßzahl, die in Bezug zum Abstand der beiden Routen steht bzw. den Abstand zwischen zwei Routen beschreibt. Unter Korrelation wird hier eine Abstandskorrelation zwischen Routen verstanden.

### Begriff: "Abstand zweier Routen"

Der Abstand zweier Routen ergibt sich aus dem Abstand jedes einzelnen Netzknotens einer Route zu jedem anderen Netzknoten der anderen Route.

### Begriff: "Abstand zweier Netzknoten"

Der Abstand zweier Netzknoten ist die Anzahl der Zwischenknoten auf einem kürzesten Weg zwischen den beiden Netzknoten.

### Begriff: "Aggregation"

Mit Aggregation ist die Anwendung einer Aggregationsfunktion (Bewertungsfunktion) gemeint, die eine oder mehrere qualitative numerische oder nicht-numerische Qualitätsmerkmale miteinander kombiniert, wobei die jeweiligen Qualitätsmerkmale gemäß ihrer Bedeutung gewichtet werden können. Beispielsweise können die Qualitätsmerkmale Pfadlänge 5, Verfügbarkeit 70% und Korrelation 4 wie folgt aggregiert werden: 0,2*5+10*70/100+0,5*4=10. Die Bewertungsfunktion liefert als Ergebnis einen Bewertungswert.

### Begriff: "Qualitätsmerkmal"

Ein Qualitätsmerkmal (Dienstgütemerkmal) einer Route ist eine Routeneigenschaft anhand der die Güte einer Route beurteilt werden kann. Beispiele für Qualitätsmerkmale sind die Korrelation der Route zu einer anderen Route, ausgedrückt durch eine Maßzahl (Korrelationsfaktor) oder die maximale Bandbreite, die auf dieser Route zur Verfügung steht.

### Begriff: "lokale Interferenz"

Als lokale Interferenz wird eine Störung einer Datenübertragung in einem verdrahteten oder drahtlosen Netzwerk angesehen, die sich nur auf die Übertragung innerhalb der 3-Hop-Nachbarschaft um den die Störung verursachenden Netzknoten auswirkt. Dies kann beispielsweise ein Netzknoten sein, der aufgrund seines Sendeverhaltens soviel Kanalkapazität beansprucht, dass benachbarte Netzknoten nicht in der Lage sind, störungsfrei eigene Daten zu versenden oder zu empfangen. Je nach Charakteristik der lokalen Interferenz können ihre Auswirkungen auch auf geringere Knotenentfernungen beschränkt sein. Auch wird in diesem Zusammenhang der Ausfall eines Netzknotens als lokale Interferenz betrachtet, die sich nur auf die Übertragung jener Routen auswirkt, die über den ausgefallenen Netzknoten gehen.

Gemäß einem ersten Gegenstand der Erfindung ist ein erstes Verfahren zum Aufbau einer abstandskorrelierten Route in einem paketvermittelten Netzwerk (Multi-Hop-Netzwerk) aus datentechnisch miteinander verbundenen Netzknoten gezeigt. In dem Netzwerk können die Netzknoten drahtgebunden oder drahtlos datentechnisch miteinander verbunden sein. Vorzugsweise sind die Netzknoten drahtlos datentechnisch miteinander verbunden.

Die aufzubauende Route soll einen Startknoten über wenigstens einen Zwischenknoten mit einem Zielknoten datentechnisch miteinander verbinden (Ende-zu-Ende-verbindung). In dem Netzwerk existiert bereits eine den Start- und den Zielknoten datentechnisch miteinander verbindende Route, welche hier und im Weiteren als "Referenzroute" bezeichnet wird. Die neue Route soll abstandskorreliert zu dieser Referenzroute aufgebaut werden.

In dem erfindungsgemäßen ersten Verfahren wird zunächst eine Mehrzahl Testrouten, die jeweils Start- und Zielknoten über wenigstens einen Zwischenknoten miteinander verbinden, mit den jeweils zugehörigen Dienstgütemerkmalen ermittelt. Als Testrouten werden hier temporäre Netzwerkpfade zwischen Start- und Zielknoten betrachtet, welche zur Einrichtung als Route im Netzwerk in Betracht kommen.

Anschließend wird für jede Testroute als Dienstgütemerkmal eine Korrelationskenngröße (Korrelationsmaßzahl) berechnet, die eine Abstandskorrelation zu der im Netzwerk vorhandenen Referenzroute beschreibt.

Daraufhin wird eine Bewertungsfunktion zur gewichteten Bewertung von Dienstgütemerkmalen auf wenigstens ein Dienstgütemerkmal der ermittelten Testrouten angewendet, wobei wenigstens die berechnete Korrelationskenngröße als Dienstgütemerkmal im Funktionsargument enthalten ist, wodurch für jede Testroute ein Bewertungsergebnis erhalten wird. Die Korrelationskenngröße hat hierbei vorzugsweise eine maximale Gewichtung innerhalb der Bewertungsfunktion.

Daraufhin wird eine Testroute aus der Mehrzahl Testrouten gemäß einer Auswahlregel für die Bewertungsergebnisse der Testrouten ausgewählt und die ausgewählte Testroute als Route im Netzwerk eingerichtet, was durch eine Antwort- bzw. Bestätigungsnachricht erfolgen kann.

Vorzugsweise wird durch die Auswahlregel eine Testroute so ausgewählt, dass die ausgewählte Testroute einen Abstand von mehr als 3 Netzknoten-Hops zur Referenzroute hat (d. h. es befinden sich stets wenigstens vier Datenlinks zwischen den Netzknoten der beiden Routen). Durch die Auswahlregel kann eine Anfragenachricht insbesondere auch so gewählt werden, dass der von der Anfragenachricht zurückgelegte Netzwerkpfad einen größtmöglichen Abstand zur Referenzroute hat.

Das erfindungsgemäße erste Verfahren kann durch ein entsprechendes Netzwerkprotokoll zentral in einer Netzwerksteuereinrichtung oder dezentral in den Netzknoten implementiert sein.

Durch das erfindungsgemäße erste Verfahren kann eine zur Referenzroute abstandskorrelierte Route aufgebaut werden, wobei die aufgebaute Route insbesondere einen Abstand von mehr als 3 Netzknoten-Hops zur Referenzroute haben kann. Dies hat den Vorteil, dass die Wahrscheinlichkeit, dass eine lokale Störung eines Netzknotens des Netzwerks zugleich Auswirkungen auf eine Nachrichtenübermittlung in der Referenzroute und in der zu dieser abstandskorreliert aufgebauten Route hat, minimiert bzw. ausgeschlossen werden kann.

Ein zweiter Gegenstand der Erfindung betrifft ein Netzwerk aus datentechnisch miteinander verbundenen Netzknoten, in dem in den Netzknoten ein Netzwerkprotokoll implementiert ist, derart, dass die Netzknoten ein Verfahren gemäß dem ersten Gegenstand der Erfindung ausführen können.

Ein dritter Gegenstand der Erfindung betrifft einen Netzknoten eines Netzwerks aus datentechnisch miteinander verbundenen Netzknoten, in welchem ein Netzwerkprotokoll implementiert ist, derart, dass der Netzknoten ein Verfahren gemäß dem ersten Gegenstand der Erfindung ausführen kann.

Gemäß einem vierten Gegenstand der Erfindung ist ein zweites Verfahren zum Aufbau einer abstandskorrelierten Route in einem paketvermittelten Netzwerk (Multi-Hop-Netzwerk) aus datentechnisch miteinander verbundenen Netzknoten gezeigt. In dem Netzwerk können die Netzknoten drahtgebunden oder drahtlos miteinander verbunden sein. Vorzugsweise sind die Netzknoten drahtlos miteinander verbunden.

Die aufzubauende Route soll einen Startknoten über wenigstens einen Zwischenknoten mit einem Zielknoten datentechnisch miteinander verbinden. In dem Netzwerk existiert bereits eine den Start- und den Zielknoten datentechnisch miteinander verbindende Referenzroute, zu welcher die neue Route abstandskorreliert aufgebaut werden soll.

In dem erfindungsgemäßen zweiten Verfahren zum Aufbau einer Route generiert der Startknoten zunächst als Routingnachricht eine Anfragenachricht (RREQ), die im Broadcast-Verfahren an den Zielknoten gesendet wird. In der Anfragenachricht ist wenigstens ein Dienstgütemerkmal zur Beschreibung der Dienstgüte des von der Anfragenachricht zurückgelegten Netzwerkpfads enthalten, wobei als Dienstgütemerkmal wenigstens eine Korrelationskenngröße enthalten ist, die eine Abstandskorrelation des von der Anfragenachricht zurückgelegten Netzwerkpfads zu der Referenzroute im Netzwerk beschreibt.

Für jeden eine Anfragenachricht empfangenden Zwischenknoten gilt:

Falls ein Zwischenknoten eine Anfragenachricht erstmalig empfängt, wird die Anfragenachricht (RREQ) in einem Anfragenachrichtenpufferspeicher des Zwischenknotens gespeichert. Zudem wird ein erster Zeitgeber mit einer voreinstellbaren ersten Ablaufzeit (T₁) gestartet, wobei während der ersten Ablaufzeit vom Netzknoten empfangene Anfragenachrichten im Anfragenachrichtenpufferspeicher gespeichert werden.

In jedem Zwischenknoten werden für die im Anfragenachrichtenpufferspeicher gespeicherten Anfragenachrichten die Dienstgütemerkmale für den von der Anfragenachrichten jeweils zurückgelegten Netzwerkpfad ergänzt, d. h. für jede Anfragenachricht werden die den zurückgelegten Netzwerkpfad einschließlich dieses Netzknotens betreffenden Dienstgütemerkmale neu ermittelt und der Anfragenachricht beigefügt, wobei insbesondere die Korrelationskenngröße aktualisiert wird.

Anschließend wird in jedem Zwischenknoten eine Bewertungsfunktion zur gewichteten Bewertung von Dienstgütemerkmalen auf wenigstens ein Dienstgütemerkmal der im Anfragenachrichtenpufferspeicher gespeicherten Anfragenachrichten angewendet, wobei jedenfalls die Korrelationskenngröße als Dienstgütemerkmal im Funktionsargument enthalten ist, wodurch für jede Anfragenachricht ein erstes Bewertungsergebnis erhalten wird.

Dann wird nach Ablauf der ersten Ablaufzeit aus den im Anfragenachrichtenpufferspeicher gespeicherten Anfragenachrichten eine Anfragenachricht gemäß einer ersten Auswahlregel für die ersten Bewertungsergebnisse ausgewählt und die ausgewählte Anfragenachricht mit den ergänzten Dienstgütemerkmalen im Broadcast-Verfahren an benachbarte Netzknoten weitergeleitet.

Vorzugsweise wird durch die erste Auswahlregel eine Anfragenachricht so gewählt, dass der von der Anfragenachricht zurückgelegte Netzwerkpfad stets einen Abstand von mehr als 3 Netzknoten-Hops (d. h. wenigstens vier Datenlinks) zur Referenzroute hat. Durch die erste Auswahlregel kann eine Anfragenachricht insbesondere auch so gewählt werden, dass der von der Anfragenachricht zurückgelegte Netzwerkpfad einen möglichst großen Abstand zur Referenzroute hat.

Für den die Anfragenachrichten empfangenden Zielknoten gilt:

Falls der Zielknoten eine von den Zwischenknoten weitergeleitete Anfragenachricht erstmalig empfängt, speichert dieser die Anfragenachricht und startet einen zweiten Zeitgeber mit einer voreinstellbaren zweiten Ablaufzeit (T₂). Während der zweiten Ablaufzeit empfangene Anfragenachrichten werden im Anfragenachrichtenpufferspeicher des Zielknotens gespeichert.

Im Zielknoten werden für die im Anfragenachrichtenpufferspeicher gespeicherten Anfragenachrichten die Dienstgütemerkmale für die von der Anfragenachrichten jeweils zurückgelegten Netzwerkpfade ergänzt, d. h. für jede Anfragenachricht werden die den zurückgelegten Netzwerkpfad einschließlich des Zielknotens betreffenden Dienstgütemerkmale neu ermittelt und der Anfragenachricht hinzugefügt, wobei insbesondere die Korrelationskenngröße aktualisiert wird.

Anschließend wird die Bewertungsfunktion auf wenigstens ein Dienstgütemerkmal der im Anfragenachrichtenpufferspeicher des Zielknotens gespeicherten Anfragenachrichten angewendet, wobei jedenfalls die Korrelationskenngröße als Dienstgütemerkmal im Funktionsargument enthalten ist, wodurch für jede Anfragenachricht ein zweites Bewertungsergebnis erhalten wird. Vorzugsweise hat die Korrelationskenngröße eine maximale Gewichtung innerhalb der Bewertungsfunktion.

Der Zielknoten wählt nach Ablauf der zweiten Ablaufzeit eine Anfragenachricht gemäß einer zweiten Auswahlregel für die zweiten Bewertungsergebnisse unter den im Anfragenachrichtenpufferspeicher gespeicherten Anfragenachrichten aus.

Vorzugsweise wird durch die zweite Auswahlregel eine Anfragenachricht so gewählt, dass der von der Anfragenachricht zurückgelegte Netzwerkpfad stets einen Abstand von mehr als 3 Netzknoten-Hops zur Referenzroute hat. Durch die zweite Auswahlregel kann eine Anfragenachricht insbesondere auch so gewählt werden, dass der von der Anfragenachricht zurückgelegte Netzwerkpfad einen größtmöglichen Abstand zur Referenzroute hat.

Daraufhin generiert der Zielknoten als Routingnachricht eine wenigstens die Abstandskorrelation zur Referenzroute als Dienstgütemerkmal enthaltende Antwortnachricht (RREP), welche in Rückwärtsrichtung wenigstens teilweise über den von der ausgewählten Anfragenachricht in Vorwärtsrichtung zurückgelegten Netzwerkpfad an den Startknoten gesendet wird, wodurch der Netzwerkpfad als Route bestätigt und damit im Netzwerk eingerichtet (aufgebaut) wird.

Durch das erfindungsgemäße zweite Verfahren kann eine zur Referenzroute abstandskorrelierte Route aufgebaut werden, wobei die Wahrscheinlichkeit, dass eine lokale Störung eines Netzknotens zugleich eine Auswirkung auf eine Nachrichtenübermittlung in der Referenzroute und in der zu dieser abstandskorreliert aufgebauten Route hat, minimiert werden kann. Das zweite Verfahren kann technisch einfach realisiert werden und ermöglicht einen zuverlässigen und sicheren Aufbau einer zur Referenzroute abstandskorrelierten Route zwischen Start- und Zielknoten.

Bei einer besonders vorteilhaften Ausgestaltung des erfindungsgemäßen zweiten Verfahrens gilt für jeden eine Anfragenachricht empfangenden Zwischenknoten:

Bei erstmaligem Empfang einer Anfragenachricht (RREQ) startet der Zwischenknoten einen dritten Zeitgeber mit einer voreinstellbaren dritten Ablaufzeit (T₃), wobei Startzeit und Dauer der dritten Ablaufzeit so gewählt sind, dass die dritte Ablaufzeit nach der ersten Ablaufzeit abläuft.

Während des Ablaufs der dritten Ablaufzeit empfangene Anfragenachrichten werden im Anfragenachrichtenpufferspeicher des Zwischenknotens gespeichert. Zudem werden für jede im Anfragenachrichtenpufferspeicher gespeicherte Anfragenachricht deren Dienstgütemerkmale unter Berücksichtigung dieses Netzknotens ermittelt und die Dienstgütemerkmale der Anfragenachricht entsprechend ergänzt.

Zudem wird die die Bewertungsfunktion zur gewichteten Bewertung von Dienstgütemerkmalen auf wenigstens ein Dienstgütemerkmal der im Anfragenachrichtenpufferspeicher des Zwischenknotens während des Ablaufs der dritten Ablaufzeit gespeicherten Anfragenachrichten angewendet, wobei wenigstens die berechnete Korrelationskenngröße im Funktionsargument enthalten ist, wodurch für jede solche Anfragenachricht ein erstes Bewertungsergebnis erhalten wird.

Zudem gilt für jeden eine Antwortnachricht empfangenden Zwischenknoten:

Bei Empfang einer Antwortnachricht prüft der Zwischenknoten, ob eine nach Ablauf der ersten Ablaufzeit und während der dritten Ablaufzeit im Anfragenachrichtenpufferspeicher des Zwischenknotens gespeicherte Anfragenachricht gemäß der ersten Auswahlregel ein besseres Bewertungsergebnis hat als die nach Ablauf der ersten Ablaufzeit weitergeleitete Anfragenachricht.

Für den Fall, dass keine besser bewertete Anfragenachricht im Zwischenknoten vorhanden ist, wird die Antwortnachricht in Rückwärtsrichtung entlang des von der vom Zielknoten ausgewählten Anfragenachricht zurückgelegten Netzwerkpfads weiterleitet.

Alternativ, für den Fall, dass eine besser bewertete Anfragenachricht im Zwischenknoten vorhanden ist, wird die Antwortnachricht in Rückwärtsrichtung entlang des von der vom Zwischenknoten besser bewerteten Anfragenachricht zurückgelegten Netzwerkpfads weitergeleitet.

Bei dieser Ausgestaltung des erfindungsgemäßen zweiten Verfahrens kann in vorteilhafter Weise der Fall berücksichtigt werden, dass ein Zwischenknoten nach Ablauf der ersten Ablaufzeit, während des Ablaufs der dritten Ablaufzeit, eine besser bewertete Anfragenachricht empfangen hat, so dass die aufzubauende Route hinsichtlich der gewünschten Qualitätsmerkmale, hier insbesondere die Abstandskorrelation zur Referenzroute, weiter verbessert werden kann.

Vorzugsweise wird im zweiten Verfahren eine von einem Zwischenknoten empfangene Antwortnachricht nur dann weitergeleitet wird, falls die dritte Ablaufzeit noch nicht abgelaufen ist, wodurch eine Gesamtdauer für den Routenaufbau begrenzt werden kann.

Ein fünfter Gegenstand der Erfindung betrifft ein Netzwerk aus datentechnisch miteinander verbundenen Netzknoten, in dem ein Netzwerkprotokoll in den Netzknoten implementiert ist, so dass die Netzknoten ein zweites Verfahren gemäß dem vierten Gegenstand der Erfindung ausführen können.

Ein sechster Gegenstand der Erfindung betrifft einen Netzknoten eines Netzwerks aus datentechnisch miteinander verbundenen Netzknoten, in dem ein Netzwerkprotokoll implementiert ist, so dass der Netzknoten ein zweites Verfahren gemäß dem vierten Gegenstand der Erfindung ausführen kann.

Gemäß einem siebten Gegenstand der Erfindung ist ein drittes Verfahren zum Aufbau einer abstandskorrelierten Route in einem paketvermittelten Netzwerk (Multi-Hop-Netzwerk) aus datentechnisch miteinander verbundenen Netzknoten gezeigt. In dem Netzwerk können die Netzknoten drahtgebunden oder drahtlos miteinander verbunden sein. Vorzugsweise sind die Netzknoten drahtlos miteinander verbunden.

Die aufzubauende Route soll einen Startknoten über wenigstens einen Zwischenknoten mit einem Zielknoten datentechnisch miteinander verbinden. In dem Netzwerk existiert bereits eine den Start- und den Zielknoten datentechnisch miteinander verbindende Referenzroute, zu welcher die neue Route abstandskorreliert aufgebaut werden soll.

In dem erfindungsgemäßen dritten Verfahren zum Aufbau einer Route generiert der Startknoten zunächst als Routingnachricht eine Anfragenachricht (RREQ), die im Broadcast-Verfahren an den Zielknoten gesendet wird. In der Anfragenachricht ist wenigstens ein Dienstgütemerkmal zur Beschreibung der Dienstgüte der Route enthalten, wobei als Dienstgütemerkmal wenigstens eine Korrelationskenngröße enthalten ist, die eine Abstandskorrelation des von der Anfragenachricht zurückgelegten Netzwerkpfads zu der Referenzroute im Netzwerk beschreibt.

Für jeden eine Anfragenachricht empfangenden Zwischenknoten gilt:

Falls ein Zwischenknoten eine Anfragenachricht erstmalig empfängt, wird die Anfragenachricht in einem Anfragenachrichtenpufferspeicher des Zwischenknotens gespeichert. Zugleich werden ein erster Zeitgeber mit einer voreinstellbaren ersten Ablaufzeit (T₁) und ein dritter Zeitgeber mit einer voreinstellbaren dritten Ablaufzeit (T₃) gestartet, wobei während der ersten Ablaufzeit und während der dritten Ablaufzeit vom Netzknoten empfangene Anfragenachrichten im Anfragenachrichtenpufferspeicher gespeichert werden.

In jedem Zwischenknoten werden für die im Anfragenachrichtenpufferspeicher gespeicherten Anfragenachrichten die Dienstgütemerkmale für den von der Anfragenachrichten jeweils zurückgelegten Netzwerkpfad ergänzt, d. h. für jede Anfragenachricht werden die den zurückgelegten Netzwerkpfad einschließlich dieses Netzknotens betreffenden Dienstgütemerkmale neu ermittelt und der Anfragenachricht hinzugefügt, wobei insbesondere die Korrelationskenngröße aktualisiert wird.

Anschließend wird in jedem Zwischenknoten eine Bewertungsfunktion zur gewichteten Bewertung von Dienstgütemerkmalen auf wenigstens ein Dienstgütemerkmal der im Anfragenachrichtenpufferspeicher gespeicherten Anfragenachrichten angewendet, wobei jedenfalls die Korrelationskenngröße als Dienstgütemerkmal im Funktionsargument enthalten ist, wodurch für jede Anfragenachricht ein erstes Bewertungsergebnis erhalten wird.

Dann wird nach Ablauf der ersten Ablaufzeit aus den im Anfragenachrichtenpufferspeicher gespeicherten Anfragenachrichten eine Anfragenachricht gemäß einer ersten Auswahlregel für die ersten Bewertungsergebnisse ausgewählt und die ausgewählte Anfragenachricht im Broadcast-Verfahren an benachbarte Netzknoten weitergeleitet.

Vorzugsweise wird durch die erste Auswahlregel eine Anfragenachricht so gewählt, dass der von der Anfragenachricht zurückgelegte Netzwerkpfad stets einen Abstand von mehr als 3 Netzknoten-Hops (d. h. wenigstens vier Datenlinks) zur Referenzroute hat. Durch die erste Auswahlregel kann eine Anfragenachricht insbesondere auch so gewählt werden, dass der von der Anfragenachricht zurückgelegte Netzwerkpfad einen möglichst großen Abstand zur Referenzroute hat.

Für den Anfragenachrichten empfangenden Zielknoten gilt:

Falls der Zielknoten eine von den Zwischenknoten weitergeleitete Anfragenachricht erstmalig empfängt, speichert dieser die Anfragenachricht und startet einen zweiten Zeitgeber mit einer voreinstellbaren zweiten Ablaufzeit (T₂). Während der zweiten Ablaufzeit empfangene Anfragenachrichten werden im Anfragenachrichtenpufferspeicher des Zielknotens gespeichert.

Im Zielknoten werden für die im Anfragenachrichtenpufferspeicher gespeicherten Anfragenachrichten die Dienstgütemerkmale für den von der Anfragenachrichten jeweils zurückgelegten Netzwerkpfad ergänzt, d. h. für jede Anfragenachricht werden die den zurückgelegten Netzwerkpfad einschließlich des Zielknotens betreffenden Dienstgütemerkmale neu ermittelt und der Anfragenachricht hinzugefügt, wobei insbesondere die Korrelationskenngröße aktualisiert wird.

Anschließend wird die Bewertungsfunktion auf wenigstens ein Dienstgütemerkmal der im Anfragenachrichtenpufferspeicher des Zielknotens gespeicherten Anfragenachrichten angewendet, wobei jedenfalls die Korrelationskenngröße als Dienstgütemerkmal im Funktionsargument enthalten ist, wodurch für jede Anfragenachricht ein zweites Bewertungsergebnis erhalten wird. Vorzugsweise hat die Korrelationskenngröße eine maximale Gewichtung innerhalb der Bewertungsfunktion.

Der Zielknoten wählt nach Ablauf der zweiten Ablaufzeit eine Mehrzahl Anfragenachrichten gemäß einer zweiten Auswahlregel für die zweiten Bewertungsergebnisse unter den im Anfragenachrichtenpufferspeicher gespeicherten Anfragenachrichten aus.

Vorzugsweise werden durch die zweite Auswahlregel Anfragenachrichten so ausgewählt, dass die von den Anfragenachrichten zurückgelegten Netzwerkpfade stets einen Abstand von mehr als 3 Netzknoten-Hops zur Referenzroute haben. Durch die zweite Auswahlregel können die Anfragenachricht insbesondere auch so gewählt werden, dass die zurückgelegten Netzwerkpfade der ausgewählten Anfragenachrichten, beginnend mit jenem Netzwerkpfad, der einen maximalen Abstand zur Referenzroute hat, einen sukzessiv abnehmenden Abstand zur Referenzroute haben.

Daraufhin generiert der Zielknoten als Routingnachricht eine wenigstens die Abstandskorrelation zur Referenzroute als Dienstgütemerkmal enthaltende Antwortnachricht (RREP), welche in Rückwärtsrichtung wenigstens teilweise jeweils über die von den ausgewählten Anfragenachrichten in Vorwärtsrichtung zurückgelegten Netzwerkpfade an den Startknoten gesendet wird.

Für jeden eine Antwortnachricht empfangenden Zwischenknoten gilt:

Bei Empfang einer Antwortnachricht prüft der Zwischenknoten, ob eine nach Ablauf der ersten Ablaufzeit und während der dritten Ablaufzeit im Anfragenachrichtenpufferspeicher des Zwischenknotens gespeicherte Anfragenachricht gemäß der ersten Auswahlregel ein besseres Bewertungsergebnis hat als die nach Ablauf der ersten Ablaufzeit weitergeleitete Anfragenachricht.

Für den Fall, dass keine besser bewertete Anfragenachricht im Zwischenknoten vorhanden ist, wird die Antwortnachricht in Rückwärtsrichtung entlang des von der vom Zielknoten ausgewählten Anfragenachricht zurückgelegten Netzwerkpfads weiterleitet.

Alternativ, für den Fall, dass eine besser bewertete Anfragenachricht im Zwischenknoten vorhanden ist, wird die Antwortnachricht in Rückwärtsrichtung entlang des von der vom Zwischenknoten besser bewerteten Anfragenachricht zurückgelegten Netzwerkpfads weitergeleitet.

Für den die Antwortnachrichten empfangenden Startknoten gilt:

Bei erstmaligem Empfang einer Antwortnachricht speichert der Startknoten die Antwortnachricht in einem Antwortnachrichtenpufferspeicher und startet einen vierten Zeitgeber mit einer voreinstellbaren vierten Ablaufzeit (T₄).

Während der vierten Ablaufzeit empfangene Antwortnachrichten werden im Antwortnachrichtenpufferspeicher gespeichert. Im Startknoten werden zudem für die im Antwortnachrichtenpufferspeicher gespeicherten Antwortnachrichten die Dienstgütemerkmale für die von den Antwortnachrichten jeweils zurückgelegten Netzwerkpfade ergänzt, d. h. für jede Anfragenachricht werden die den zurückgelegten Netzwerkpfad einschließlich des Startknotens betreffenden Dienstgütemerkmale neu ermittelt und der Antwortnachricht hinzugefügt, wobei insbesondere die Korrelationskenngröße aktualisiert wird.

Anschließend wird die Bewertungsfunktion auf wenigstens ein Dienstgütemerkmal der im Antwortnachrichtenpufferspeicher des Startknotens gespeicherten Antwortnachrichten angewendet, wodurch für jeden von einer Antwortnachricht zurückgelegten Netzwerkpfad ein drittes Bewertungsergebnis erhalten wird.

Nach Ablauf der vierten Ablaufzeit wird eine Antwortnachricht aus den im Antwortnachrichtenpufferspeicher des Startknotens gespeicherten Antwortnachrichten gemäß einer dritten Auswahlregel für die Bewertungsergebnisse ausgewählt. Vorzugsweise wird durch die dritte Auswahlregel eine Antwortnachricht so ausgewählt, dass der von der Antwortnachricht zurückgelegte Netzwerkpfad stets einen Abstand von mehr als 3 Netzknoten-Hops zur Referenzroute hat. Durch die dritte Auswahlregel kann die Antwortnachricht insbesondere auch so gewählt werden, dass der zurückgelegte Netzwerkpfad der ausgewählten Antwortnachricht einen maximalen Abstand zur Referenzroute hat.

Anschließend wird durch ein vom Startknoten zum Zielknoten gesendetes Datenpaket, das in Vorwärtsrichtung über den durch die ausgewählte Antwortnachricht zurückgelegten Netzwerkpfad an den Zielknoten gesendet wird, der ausgewählte Netzwerkpfad eingerichtet (aufgebaut). Der Startknoten kann zu diesem Zweck eine Bestätigungsnachricht (RCFM = Route Confirmation) generieren, die an den Zielknoten gesendet wird. Alternativ kann auch durch ein erstes Nutzdatenpaket (welches von einer im Rahmen des Netzwerkprotokolls versendeten Routingnachricht verschieden ist) die Route bestätigt werden. Dies ist sinnvoll, da ein Nutzdatenpaket die Bestätigungsnachricht überholen oder eine Bestätigungsnachricht verloren gehen kann.

Durch das erfindungsgemäße dritte Verfahren kann eine zur Referenzroute abstandskorrelierte Route aufgebaut werden, wobei die Wahrscheinlichkeit, dass eine lokale Störung eines Netzknotens zugleich eine Auswirkung auf eine Nachrichtenübermittlung in der Referenzroute und in der zu dieser abstandskorreliert aufgebauten Route hat, minimiert werden kann. Das dritte Verfahren kann technisch einfach realisiert werden und ermöglicht einen zuverlässigen und sicheren Aufbau einer zur Referenzroute abstandskorrelierten Route zwischen Start- und Zielknoten.

Zudem ermöglicht das dritte Verfahren in vorteilhafter Weise, dass für eine Mehrzahl Netzwerkpfade, welche in Vorwärtsrichtung vom Start- zum Zielknoten bereits hinsichtlich der gewünschten Qualitätsmerkmale ausgewählt wurden, berücksichtigt werden kann, dass ein Zwischenknoten nach Ablauf der ersten Ablaufzeit und während des Ablaufs der zweiten Ablaufzeit, eine besser bewertete Anfragenachricht empfangen hat, so dass die aufzubauende Route auch in Rückwärtsrichtung vom Zielzum Startknoten hinsichtlich der gewünschten Qualitätsmerkmale, hier insbesondere die Abstandskorrelation zur Referenzroute, weiter verbessert werden kann.

Vorzugsweise wird im dritten Verfahren eine von einem Zwischenknoten empfangene Antwortnachricht nur dann weitergeleitet wird, falls die dritte Ablaufzeit noch nicht abgelaufen ist, wodurch eine Gesamtdauer für den Routenaufbau begrenzt werden kann.

Ein achter Gegenstand der Erfindung betrifft ein Netzwerk aus datentechnisch miteinander verbundenen Netzknoten, in dem ein Netzwerkprotokoll in den Netzknoten implementiert ist, so dass die Netzknoten ein drittes Verfahren gemäß dem siebten Gegenstand der Erfindung ausführen können.

Ein neunter Gegenstand der Erfindung betrifft einen Netzknoten eines Netzwerks aus datentechnisch miteinander verbundenen Netzknoten, in dem ein Netzwerkprotokoll implementiert ist, so dass der Netzknoten ein drittes Verfahren gemäß dem siebten Gegenstand der Erfindung ausführen kann.

Gemäß einer besonders vorteilhaften Ausgestaltung der erfindungsgemäßen Verfahren wird eine zur Referenzroute parallele Route aufgebaut, so dass redundante Routen für eine Nachrichtenübermittlung abstandskorreliert eingerichtet werden können, wodurch die Wahrscheinlichkeit, dass im Falle einer lokalen Störung eines Netzknotens sowohl eine für die Nachrichtenübermittlung aktive Route als auch deren Ersatzroute beeinträchtigt ist, minimiert werden kann.

Gemäß einer weiteren besonders vorteilhaften Ausgestaltung der erfindungsgemäßen Verfahren tauscht jeder Netzknoten mit anderen Netzknoten Routeninformationsnachrichten aus, wobei in jeder Routeninformationsnachricht Daten enthalten sind, welche beschreiben, ob ein die Routeninformationsnachricht sendender Netzknoten Teil der Referenzroute ist. Besonders vorteilhaft sind in jeder Routeninformationsnachricht Daten enthalten, welche beschreiben, ob ein zu dem die Routeninformationsnachricht sendenden Netzknoten benachbarter Netzknoten Teil der Referenzroute ist, wobei in jeder Routeninformationsnachricht insbesondere bevorzugt Daten enthalten sein können, welche beschreiben, ob ein zu dem die Routeninformationsnachricht sendenden Netzknoten innerhalb einer 1-Hop-, 2-Hop- oder 3-Hop-Nachbarschaft benachbarter Netzknoten Teil der Referenzroute ist. Durch diese Maßnahme wird jeder Netzknoten technisch einfach und zuverlässig in die Lage versetzt, die Abstandskorrelation eines von einer Routingnachricht zurückgelegten Netzwerkpfads zur Referenzroute zu ermitteln.

Die Erfindung wird nun anhand eines Ausführungsbeispiels näher erläutert, wobei Bezug auf die beigefügten Figuren genommen wird.
- Fig. 1: veranschaulicht in einer schematischen Darstellung ein Ausführungsbeispiel der Erfindung;
- Fig. 2: veranschaulicht in einer weiteren schematischen Darstellung das Ausführungsbeispiel der Erfindung;
- Fig. 3: veranschaulicht in einer ersten schematischen Darstellung ein Netzwerk mit zwei stark korrelierten Parallelrouten und in einer zweiten schematischen Darstellung ein Netzwerk mit zwei gering korrelierten Parallelrouten;
- Fig. 4: veranschaulicht in einer schematischen Darstellung ein Netzwerk mit zwei stark korrelierten Parallelrouten, die durch lokale Interferenz eines Netzknotens beeinträchtigt sind;

- Fig. 5: veranschaulicht in einer schematischen Darstellung ein Netzwerk mit zwei gering korrelierten Parallelrouten, von denen lediglich eine Route durch lokale Interferenz eines Netzknotens beeinträchtigt ist.

Die Figuren 3 bis 5 wurden bereits in der Beschreibungseinleitung ausführlich erläutert, so dass sich hier eine weitere Beschreibung erübrigt.

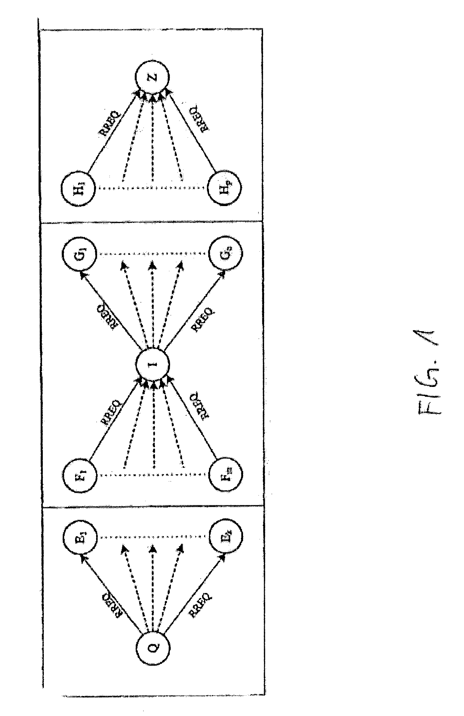

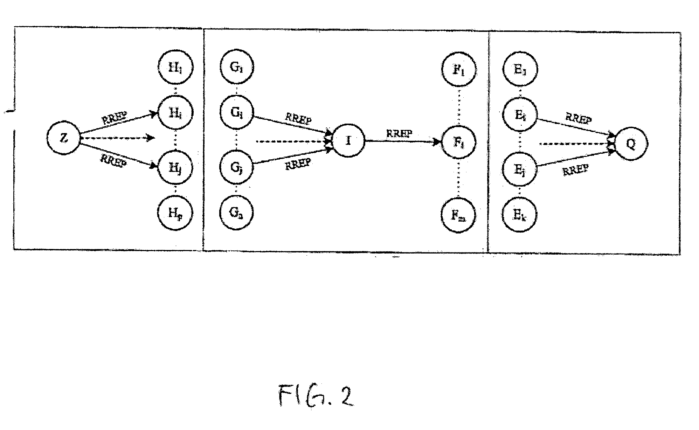

Unter Bezugnahme auf Fig. 1 und Fig. 2 wird nun ein Ausführungsbeispiel der Erfindung beschrieben.

In den Figuren 1 und 2 ist ein drahtloses vermaschtes verbindungsorientiertes paketvermitteltes Netzwerk (Multi-Hop-Netzwerk) mit einer Mehrzahl über Punkt-zu-Punkt-Datenlinks datentechnisch miteinander verbundenen Netzknoten, die jeweils durch indizierte Buchstaben bezeichnet sind, gezeigt. Die Netzknoten sind jeweils mit zur Datenverarbeitung geeigneten Prozessiereinrichtungen, sowie mit Sende- und Empfangseinrichtungen zum Senden bzw. Empfangen von Datenpaketen versehen. Ein in den Netzknoten dezentral implementiertes Netzwerkprotokoll dient zur Ausführung eines Ausführungsbeispiels für ein erfindungsgemäßes Verfahren.

In dem Verfahren wird auf Basis einer Verbindungsanfrage (Anfrage nach einer Route von einem Startknoten Q zu einem Zielknoten Z) eine Folge von Prozessschritten zum Einrichten der Route im Netzwerk gestartet, welche hier in ihrer Gesamtheit mit dem Begriff "Route Discovery" (Routenfindung) bezeichnet werden. Eine selbe Route Discovery ist durch die Adressen von Start- und Zielknoten, eine Serviceklasse und eine Routennummer eindeutig identifizierbar.

Die mittels des erfindungsgemäßen Verfahrens aufzubauende Route soll einen Abstand von mehr als 3 Netzknoten-Hops zu einer bereits im Netzwerk existierenden Route (Referenzroute), hier beispielsweise eine Parallelroute, haben. Es wird angenommen, dass eine solche Parallelroute bereits im Netzwerk existiert. Sie kann beispielsweise durch eine frühere Route Discovery des erfindungsgemäßen Verfahrens aufgebaut worden sein.

Zu diesem Zweck generiert der Startknoten Q zunächst als Routingnachricht eine Anfragenachricht RREQ (RREQ = Route Request), die im Broadcast-Verfahren an alle nächsten Nachbarn des Startknotens Q gesendet wird. Dies ist in Fig. 1 linke Darstellung, worin der Startknoten Q und die nächsten Nachbarn E₁...Eₖ des Startknotens Q gezeigt sind, anhand von Pfeilen, welche das Aussenden der Anfragenachricht RREQ symbolisieren, schematisch veranschaulicht.

Das Nachrichtenformat der Anfragenachricht RREQ ist hier beispielsweise wie folgt:

| | |
|---|---|
| Feld | Größe |
| Nachrichtentyp | 4 Bit |
| Quelladresse | 32 Bit |
| Zieladresse | 32 Bit |
| Serviceklasse | 8 Bit |
| Routennummer | 8 Bit |
| Route Request Nummer | 16 Bit |
| Dienstgüteinformationen: | |
| Korrelationsfaktor | 16 Bit |
| Qualifizierte Queue-Länge | 16 Bit |
| Minimale reservierte Bandbreite | 8 Bit |
| Minimale freie Bandbreite | 8 Bit |
| Länge der Route | 8 Bit |

Demnach ist in der Anfragenachricht RREQ ein Identifikator für den Nachrichtentyp (im vorliegenden Fall "Anfragenachricht"), ein Identifikator des Startknotens, ein Identifikator des Zielknotens, ein Identifikator der gewünschten Serviceklasse, eine Routennummer zur Identifikation der aufzubauenden Route und eine Route Request Nummer zur Identifikation der Anfragenachricht RREQ enthalten.

Zusätzlich sind verschiedene Dienstgüteinformationen zur Beschreibung von Eigenschaften des von der Anfragenachricht zurückgelegten Netzwerkpfads enthalten, worunter insbesondere ein Korrelationsfaktor (Korrelationskenngröße) zählt, der die Abstandskorrelation der aufzubauenden Route zu der bereits im Netzwerk existierenden Parallelroute angibt. Weitere Dienstgüteinformationen sind eine qualifizierte Queue-Länge (Queue = Warteschlange), eine minimale Bandbreite, die für eine Datenübertragung auf der Route reserviert ist, eine minimale freie Bandbreite und die Länge der Route.

Für einen jeden zwischen dem Startknoten Q und dem Zielknoten Z liegenden Zwischenknoten des Netzwerks gilt:

Wenn ein Zwischenknoten des Netzwerks eine Anfragenachricht RREQ einer selben Route Discovery zum ersten Mal empfängt, speichert dieser die Anfragenachricht RREQ in einem Anfragenachrichtenpufferspeicher (Route Request Buffer) und startet einen ersten Zeitgeber (Timer) mit einer voreinstellbaren ersten Ablaufzeit T₁ sowie einen dritten Timer mit einer voreinstellbaren dritten Ablaufzeit T₃. Startzeit und Länge der beiden Ablaufzeiten sind so gewählt, dass die dritte Ablaufzeit T₃ erst nach der ersten Ablaufzeit T₁ abläuft.

Während des Ablaufs der ersten Ablaufzeit T₁ und während des Ablaufs der dritten Ablaufzeit T₃ werden alle an diesem Zwischenknoten ankommenden Anfragenachrichten RREQ, die zur selben Route Discovery gehören, im Anfragenachrichtenpufferspeicher zwischengespeichert (gepuffert). Somit werden auch nach Ablauf der ersten Ablaufzeit T₁ bis zum Ablauf der dritten Ablaufzeit T₃ alle ankommenden Anfragenachrichten RREQ, die zur selben Route Discovery gehören, im Anfragenachrichtenpufferspeicher zwischengespeichert.

Nach Ablauf der ersten Ablaufzeit T₁ wird vom Zwischenknoten aus allen während des Ablaufs der ersten Ablaufzeit T₁ im Anfragenachrichtenpufferspeicher gespeicherten Anfragenachrichten RREQ eine Anfragenachricht ausgewählt. Eine Auswahl erfolgt auf Basis der Qualitätsmerkmale der als Dienstgüteinformationen in den Anfragenachrichten RREQ gespeicherten Qualitätsmerkmale. Jeder Zwischenknoten aktualisiert zu diesem Zweck die Dienstgüteinformationen der gepufferten Anfragenachrichten.

Im Zwischenknoten wird zu diesem Zweck eine Aggregations- bzw. Bewertungsfunktion für jede gepufferte Anfragenachricht RREQ ausgeführt, welche eine gewichtete Bewertung der (aktualisierten) Qualitätsmerkmale der Anfragenachricht RREQ ermöglicht. Als Ergebnis gibt die Bewertungsfunktion einen Bewertungswert für jede Anfragenachricht RREQ aus. Als Qualitätsmerkmal wird hier insbesondere der Korrelationsfaktor, d. h. eine Maßzahl für die Abstandskorrelation des von der Anfragenachricht zurückgelegten Netzwerkpfads zu der im Netzwerk bereits aufgebauten Parallelroute berücksichtigt. Vorzugsweise erhält der Korrelationsfaktor aus den in die Bewertungsfunktion eingehenden Qualitätsmerkmalen ein höchstes Gewicht (Priorität).

Die Auswahl einer Anfragenachricht RREQ aus den gepufferten Anfragenachrichten RREQ durch den Zwischenknoten erfolgt gemäß einer wählbaren Auswahlregel für die Ergebnisse der Bewertungsfunktion, wobei hier eine Anfragenachricht RREQ gewählt wird, deren zurückgelegter Netzwerkpfad einen Abstand von mehr als 3 Netzknoten-Hops zur Referenzroute hat. Insbesondere kann auch jene Anfragenachricht RREQ ausgewählt werden, deren zurückgelegter Netzwerkpfad eine geringste Korrelation, das heißt einen größten Abstand zu der bereits bestehenden Parallelroute hat.

Anschließend modifiziert der Netzknoten die ausgewählte Anfragenachricht RREQ, indem alle Routing-relevanten Informationen des Netzknotens angepasst werden. In der Anfragenachricht RREQ werden somit die Dienstgüteinformationen aktualisiert, wobei insbesondere der Korrelationsfaktor der aufzubauenden Route zu der bereits existierenden Parallelroute unter Berücksichtigung des die Anfragenachricht RREQ sendenden Netzknotens angepasst wird.

Um den Netzknoten eine Bestimmung der Korrelation zu einer Route zu ermöglichen, tauschen in dem erfindungsgemäßen Verfahren alle Netzknoten mittels Routeninformationsnachrichten Informationen über Routen in der Nachbarschaft eines Netzknotens aus. Dies erfolgt in der Weise, dass jeder Netzknoten allen nächsten Nachbarknoten durch Übermittlung der Routeninformationsnachricht mitteilt, welche Routen ihn als Zwischenknoten enthalten und welche Routen über Netzknoten in seiner 1-Hop-, 2-Hop- und 3-Hop-Nachbarschaft gehen.

Auf Basis der über die Routeninformationsnachrichten übermittelten Informationen kann eine Berechnung der Korrelation einer Route erfolgen, wobei jeder Zwischenknoten zu diesem Zweck eine Aggregation der Anzahl aller Zwischenknoten einer Route in der 1-Hop-, 2-Hop- und 3-Hop-Nachbarschaft, sowie der Anzahl der Parallelrouten, die über den entsprechenden Netzknoten gehen, durchführt. Als Aggregationsfunktion kann eine Addition verwendet werden. Die Anzahl der Parallelrouten wird bei der Aggregation nach Abstand gewichtet. Die Gewichtung ist ansteigend von Routen in der Drei-Hop-Nachbarschaft bis Routen auf dem Netzknoten.

Im vorliegenden Ausführungsbeispiel werden die Routeninformationsnachrichten bezüglich der Referenzroute übermittelt, welche eine Parallelroute ist. Gleichermaßen kann das Verfahren auch dazu verwendet werden, die Korrelation zu Routen einer anderen Verbindung (keine Parallelrouten) zu bestimmen und zu berücksichtigen.

Im Weiteren ist ein beispielhafter Algorithmus zur Bestimmung der Korrelation anhand von Nachbarschaftsinformationen angegeben:

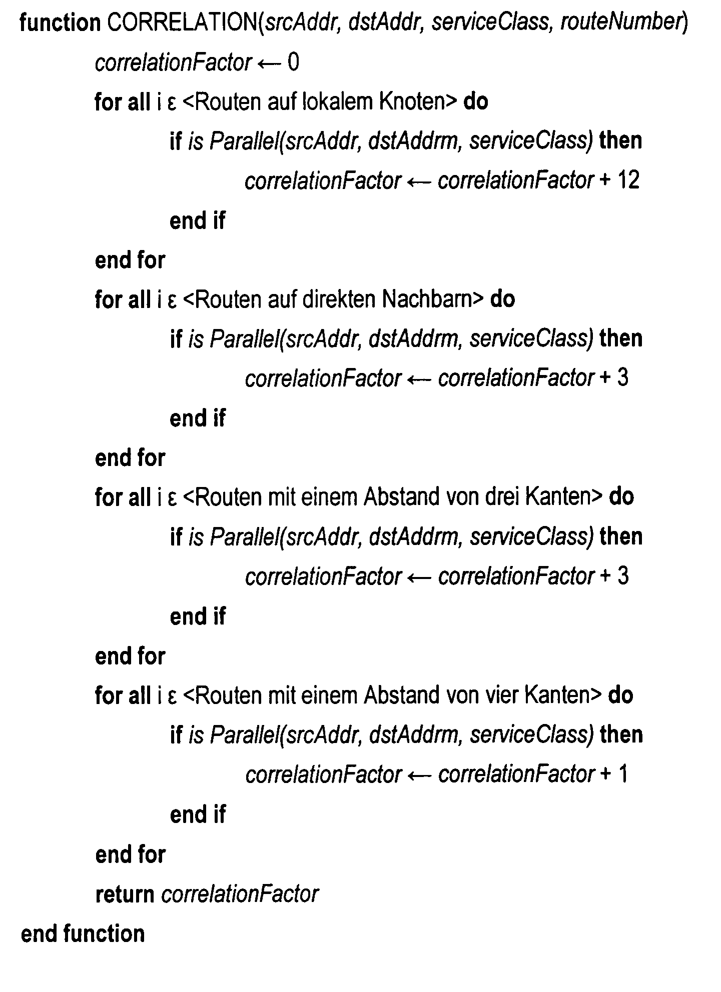

Anschließend sendet der Netzknoten die modifizierte Anfragenachricht RREQ im Broadcast-Verfahren an alle seine nächsten Nachbarknoten.

In Fig. 1 ist dies durch die mittlere Abbildung veranschaulicht, welche einen Zwischenknoten I zeigt, der von einer Mehrzahl Zwischenknoten F₁...Fₘ jeweils eine Anfragenachricht RREQ erhält, die empfangenen Anfragenachrichten RREQ im Anfragenachrichtenpufferspeicher puffert, aus diesen eine Anfragenachricht RREQ auswählt, die ausgewählte Anfragenachricht RREQ entsprechend seiner eigenen Routing-relevanten Informationen modifiziert und diese modifizierte Anfragenachricht RREQ an alle unmittelbar benachbarten Netzknoten G₁...Gₙ im Broadcast-Verfahren sendet. Jeder Netzknoten speichert die Information, von welchem Netzknoten er eine jeweilige Anfragenachricht RREQ empfangen hat.

Schließlich erhält der Zielknoten Z von seinen benachbarten Netzknoten H₁...Hₚ jeweils eine Anfragenachricht RREQ, was in Fig. 1, rechte Abbildung, veranschaulicht ist. Mit dem Empfang der ersten Anfragenachricht RREQ einer selben Route Discovery startet der Zielknoten Z einen zweiten Timer mit einer voreinstellbaren zweiten Ablaufzeit T₂. Während des Ablaufs der zweiten Ablaufzeit T₂ puffert der Zielknoten Z alle empfangenen Anfragenachrichten RREQ in einem Anfragenachrichtenpufferspeicher.

Nach Ablauf der zweiten Ablaufzeit T₂ wird aus den im Anfragenachrichtenpufferspeicher gespeicherten Anfragenachrichten RREQ eine Mehrzahl Anfragenachrichten RREQ durch den Zielknoten Z ausgewählt. Die Auswahl einer Anfragenachricht RREQ erfolgt auf Basis der als Dienstgüteinformationen in den Anfragenachrichten RREQ gespeicherten Qualitätsmerkmale, wobei nach Aktualisierung der Qualitätsmerkmale eine Bewertungsfunktion wie bereits in den Zwischenknoten angewendet wird. Eine Gewichtung der Qualitätsmerkmale in der Bewertungsfunktion erfolgt vorzugsweise in der Weise, dass dem Korrelationsfaktor ein höchstes Gewicht unter den Qualitätsmerkmalen zugewiesen wird.

Die Auswahl der Mehrzahl von Anfragenachrichten RREQ erfolgt gemäß einer Auswahlregel für die Bewertungsergebnisse, wobei hier beispielsweise Anfragenachrichten ausgewählt werden, deren zurückgelegter Netzwerkpfad jeweils einen Abstand von mehr als 3 Netzknoten-Hops von der Referenzroute beabstandet ist. Insbesondere können auch jene Anfragenachrichten RREQ mit sukzessiv ansteigender Korrelation zur Parallelroute, beginnend mit der Anfragenachricht RREQ, die die kleinste Korrelation zur Parallelroute hat, ausgewählt werden. Durch die Auswahl einer Mehrzahl Anfragenachrichten RREQ wird eine Mehrzahl möglicher paralleler Vorwärtsrouten zwischen Start-und Zielknoten ausgewählt, in denen beispielsweise eine möglichst hohe Abstandskorrelation zu der bereits aufgebauten Parallelroute realisiert sein kann.

Anschließend generiert der Zielknoten Z eine Antwortnachricht (RREP = "Route Reply") mit aktualisierten Dienstgüteinformationen für die zurückgelegten Netzwerkpfade, die im Unicast-Verfahren jeweils an alle benachbarten Zwischenknoten, von denen die ausgewählten Anfragenachrichten RREQ empfangen wurden, gesendet wird. Dies ist in Fig. 2, linke Abbildung, veranschaulicht, worin in schematischer Weise dargestellt ist, dass der Zielknoten Z eine Mehrzahl Antwortnachrichten an die unmittelbar benachbarten Netzknoten H₁...Hₚ sendet.

Das Nachrichtenformat der Antwortnachricht RREP ist hier beispielsweise wie folgt:

| | |
|---|---|
| Feld | Größe |
| Nachrichtentyp | 4 Bit |
| Quelladresse | 32 Bit |
| Zieladresse | 32 Bit |
| Serviceklasse | 8 Bit |
| Routennummer | 8 Bit |
| Route Request Nummer | 16 Bit |
| Dienstgüteinformationen: | |
| Korrelationsfaktor | 16 Bit |
| Qualifizierte Queue-Länge | 16 Bit |
| Minimale reservierte Bandbreite | 8 Bit |
| Minimale freie Bandbreite | 8 Bit |
| Länge der Route | 8 Bit |

Jeder Zwischenknoten der eine Antwortnachricht RREP empfängt, sendet diese Antwortnachricht im Unicast-Verfahren an den nächsten Netzknoten weiter, von dem er die weiter geleitete Anfragenachricht RREQ erhalten hat. Voraussetzung für eine Weiterleitung einer Antwortnachricht RREP durch einen Zwischenknoten ist, dass die zweite Ablaufzeit T₂ der zugehörigen Route Discovery des Zwischenknotens noch nicht abgelaufen ist. Falls die zugehörige zweite Ablaufzeit T₂ der zugehörigen Route Discovery bereits abgelaufen ist, wird die Antwortnachricht RREP nicht weiter verarbeitet.

Die Antwortnachricht RREP wird somit im Unicast-Verfahren in Rückwärtsrichtung der durch die ausgewählten Anfragenachrichten RREQ definierten Vorwärtsrouten zum Startknoten Q geleitet. Über die Antwortnachricht RREP wird allen empfangenden Zwischenknoten und dem Startknoten Q die ausgewählte Route mitgeteilt. Jeder Zwischenknoten, der eine Antwortnachricht RREP empfängt, kann diese anhand der Adresse des Startknotens und der Route Request Nummer einer Route Discovery zuordnen.

Es kann auch der Fall eintreten, dass ein Zwischenknoten mehrere Antwortnachrichten RREP empfängt, die an mehrere Netzknoten, von dem er die entsprechenden Anfragenachrichten RREQ empfangen hat, weitergeleitet werden.

Da ein Zwischenknoten bis zum Ablauf der dritten Ablaufzeit T₃, also auch noch nach Aussenden einer Anfragenachricht RREQ ankommende Anfragenachrichten RREQ im Anfragenachrichtenpufferspeicher puffert, kann der Fall eintreten, dass durch eine nach Ablauf der dritten Ablaufzeit T₃ empfangene Anfragenachricht RREQ eine besser bewertete Route definiert ist. In diesem Fall leitet der Zwischenknoten die Antwortnachricht RREP an jenen Vorgängerknoten weiter, von dem er die beste (am besten bewertete) gepufferte Anfragenachricht RREQ empfangen hat. Die Antwortnachricht wird zu diesem Zweck mit den eigenen Qualitätsmerkmalen ergänzt. Hierdurch besteht die Möglichkeit, nachträgliche Routenverbesserungen durch im Zwischenknoten nach bereits erfolgtem Aussenden einer Anfragenachricht RREQ empfangene Anfragenachrichten RREQ zu berücksichtigen. Eine Auswahl der besten Anfragenachricht RREQ erfolgt durch die Anwendung der Bewertungsfunktion und Auswahl gemäß der Auswahlregel für das Bewertungsergebnis (beispielsweise geringste Korrelation zur bereits vorhandenen Parallelroute).

Dies ist in Fig. 2, mittlere Abbildung, veranschaulicht, welche einen Zwischenknoten I zeigt, der von einer Mehrzahl Zwischenknoten Gᵢ...Gⱼ jeweils eine Antwortnachricht RREP empfängt und diese an einen Netzknoten Fᵢ sendet, von dem er die Anfragenachricht RREQ mit der besten Route empfangen hat.

Da ein Zwischenknoten bis zum Ablauf der dritten Ablaufzeit T₃ Anfragenachrichten RREQ im Anfragenachrichtenpufferspeicher puffert, kann auch der Fall eintreten, dass eine Anfragenachricht RREQ gepuffert wird, die diesen Netzknoten auf einer Schleife im Netzwerk erneut erreicht, beispielsweise indem sie von einem nachfolgenden Netzknoten im Broadcast-Verfahren an den Netzknoten geleitet wird. Da jedoch, anders als bei einem Source-Routing-Verfahren, keine Informationen über die bereits besuchten Netzknoten in den Protokollnachrichten gespeichert werden, kann eine Schleifenbildung ohne Weiteres nicht erkannt werden. Wird jedoch für eine Anfragenachricht RREQ nicht erkannt, dass sie sich auf einer Schleife befindet, könnte sie unter Umständen für den Aufbau einer Rückwärtsroute bei Ankunft einer Antwortnachricht RREP ausgewählt werden. Die Antwortnachricht RREP würde dann den gleichen Weg rückwärts wie die Anfragenachricht RREQ nehmen und erneut am Ausgangspunkt der Schleife ankommen. Da der Netzknoten an dieser Stelle nach den gleichen Kriterien den weiteren Verlauf der Rückwärtsroute bestimmt, würde die Antwortnachricht RREP auf der Schleife bleiben, bis sie aufgrund einer abgelaufenen Maximallaufzeit (TTL = Time To Live) gelöscht werden würde.

Um eine Schleifenbildung zu verhindern, muss zunächst verhindert werden, dass Anfragenachrichten RREQ, die einen Netzknoten bereits passiert haben, erneut berücksichtigt werden. Dies ist aber ohne weiteres nicht möglich, da der Pfad einer Nachricht nicht nachvollzogen werden kann. Um dennoch eine Schleifenbildung zu vermeiden, wird eine Heuristik verwendet. Diese besteht darin, dass eine empfangene Anfragenachricht RREQ nur dann im Anfragenachrichtenpufferspeicher gepuffert wird, wenn dort keine andere Anfragenachricht RREQ gespeichert ist, die in allen Qualitätsmerkmalen (Dienstgüteinformationen) nicht schlechter ist. Hierfür kann beispielsweise folgender Algorithmus angewendet werden:

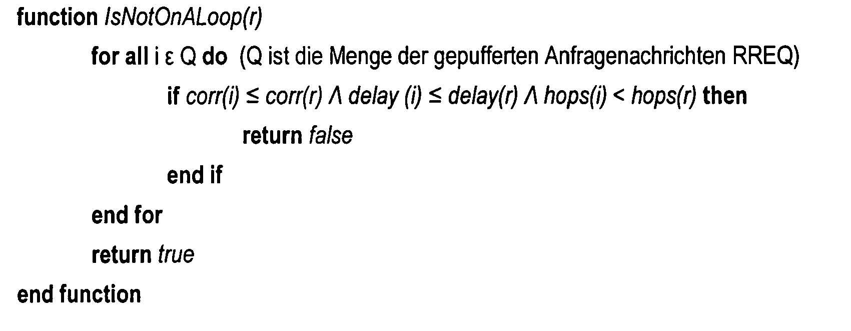

Somit wird eine Anfragenachricht RREQ nicht gepuffert, wenn sie sich auf einer Schleife befindet. Die ursprüngliche Anfragenachricht RREQ, von welcher die wiederholt empfangene Anfragenachricht RREQ abstammt, befindet sich stets im Anfragenachrichtenpufferspeicher. Aus diesem Grund liegt mindestens eine Anfragenachricht RREQ im Anfragenachricht-Pufferspeicher vor, die aufgrund der Monotonie in allen Qualitätsmerkmalen nicht schlechter ist, als die wiederholt empfangene Anfragenachricht RREQ. Eine auf einer Schleife befindliche Anfragenachricht RREQ wird somit in jedem Fall erkannt.

Wenn der Startknoten Q die erste Antwortnachricht RREP der Route Discovery empfängt, startet er einen vierten Timer mit einer wählbaren vierten Ablaufzeit T₄. Während des Ablaufs der vierten Ablaufzeit T₄ werden weitere ankommende Antwortnachrichten RREP in einem Antwortnachrichtenpufferspeicher des Startknotens Q zwischengespeichert.

Nach Ablauf der vierten Ablaufzeit T₄ wählt der Startknoten Q aus den im Anfragenachrichtenpufferspeicher gespeicherten Anfragenachrichten RREQ eine Anfragenachricht aus. Die Auswahl einer Anfragenachricht RREQ erfolgt auf Basis der als Dienstgüteinformationen in den Anfragenachrichten RREQ gespeicherten Qualitätsmerkmale, wobei hierzu eine Bewertungsfunktion wie bereits in den Zwischenknoten und im Zielknoten angewendet wird. Eine Gewichtung der Qualitätsmerkmale in der Bewertungsfunktion erfolgt vorzugsweise in der Weise, dass dem Korrelationsfaktor ein höchstes Gewicht unter den Qualitätsmerkmalen zugewiesen wird. Als beste Antwortnachricht RREP wird beispielsweise jene mit der geringsten Korrelation zu der bereits im Netzwerk aufgebauten Parallelroute ausgewählt.

Anschließend erzeugt der Startknoten Q eine Bestätigungsnachricht, welche über die zur ausgewählten Antwortnachricht RREP gehörende Vorwärtsroute an den Zielknoten Z geleitet wird, wodurch die ausgewählte Route bestätigt und die Route aufgebaut wird.

Das Nachrichtenformat der Bestätigungsnachricht ist hier beispielsweise wie folgt:

| | |
|---|---|
| Feld | Größe |
| Nachrichtentyp | 4 Bit |
| Quelladresse | 32 Bit |
| Zieladresse | 32 Bit |
| Serviceklasse | 8 Bit |
| Routennummer | 8 Bit |

Für jeden Zwischenknoten gilt: Falls ein Zwischenknoten eine solche Bestätigungsnachricht empfängt, fügt dieser einen entsprechenden Eintrag in seine Routing-Tabelle ein. Dieser Eintrag enthält die Adresse des Startknotens, die Adresse des Zielknotens, die Serviceklasse, die Nummer der Route, die Adresse des die Bestätigungsnachricht sendenden Netzknotens (Vorgänger-Adresse) und die Adresse des nachfolgenden Netzknotens (Nachfolger-Adresse). Durch den Eintrag der Vorgänger-Adresse ist auch eine Datenübertragung in Rückwärtsrichtung von Ziel- zu Startknoten ermöglicht, so dass ein bidirektionaler Verbindungspfad eingerichtet wird. Eine Datenübermittlung in Richtung zum Startknoten ist insbesondere dann wichtig, wenn der Startknoten über eine Verschlechterung der Dienstgüte informiert werden soll.

Wenn der Zielknoten Z die Bestätigungsnachricht empfängt, ist die neue Route im Netzwerk aufgebaut.

Nachdem die Route Discovery, bei welcher eine neue Route im Netzwerk abstandskorreliert zu einer bereits im Netzwerk vorhandenen Parallelroute aufgebaut wurde, abgeschlossen ist, prüft der Startknoten, ob mindestens eine weitere Parallelroute bzw. redundante Route im Netzwerk vorhanden ist. Im vorstehenden Ausführungsbeispiel wurden angenommen, dass bereits eine Parallelroute im Netzwerk vorhanden ist.

Für den Fall, dass noch keine Route im Netzwerk eingerichtet ist, werden zwei verschiedene Route Discoveries nacheinander (sukzessiv) durchlaufen, wobei in der ersten Route Discovery eine erste Route und in der zweiten Route Discovery eine zur ersten Route abstandskorrelierte zweite Route aufgebaut wird. Für den Aufbau der ersten Route beträgt der Wert des Korrelationsfaktors Null, da eine Korrelation zu einer bereits existierenden Route nicht berücksichtigt werden kann.

In dem erfindungsgemäßen Verfahren kann durch die Verwendung einer Bewertungsfunktion eine Route mit einer insbesondere geringsten Korrelation zu einer beispielsweise parallelen Route im Netzwerk gefunden und aufgebaut werden. Dies impliziert, dass eine knotendisjunkte Route gefunden wird, falls es eine solche gibt. Dies impliziert auch, dass eine nicht-knotendisjunkte Route gefunden wird, falls es keine knotendisjunkte Route gibt.

In dem erfindungsgemäßen Verfahren kann eine Route mit einem große Abstand, insbesondere mit einem Abstand von mehr als 3 Netzknoten-Hops, beispielsweise mit einem maximal möglichen Abstand zu einer Referenzroute aufgebaut werden, was den Vorteil hat, dass die Wahrscheinlichkeit, dass eine lokale Störung Auswirkungen auf beide Routen hat, minimiert wird. Durch sukzessives Durchlaufen mehrerer Route Discoveries können mehrere Routen in der Weise erzeugt werden.

Ist in den aufgebauten Routen jeder Netzknoten einer Route mehr als drei Hops von einem beliebigen Netzknoten der anderen Route beabstandet, können lokale Interferenzen, die die Ursache für eine Dienstgüteverschlechterung auf der einen Route sind, keine Auswirkungen auf die Dienstgüte der anderen Route haben.

Falls eine Datenübermittlung exklusiv über eine Route erfolgt und tritt während der Datenübermittlung eine Verschlechterung der Dienstgüte auf oder fällt ein Zwischenknoten der aktiven Route aus, kann der Datenverkehr über eine Parallelroute abgewickelt, welche dann zur aktiven Route wird. In diesem Fall wird eine Parallelroute als Ersatzverbindungspfad aufgebaut, ohne dass die bestehende Datenübertragung behindert wird. Die frühere Route kann durch eine vom Startknoten zum Zielknoten geleitete Abbaunachricht (Route Destruction) abgebaut werden.

Das Nachrichtenformat einer solchen Abbaunachricht ist beispielsweise wie folgt:

| | |
|---|---|
| Feld | Größe |
| Nachrichtentyp | 4 Bit |
| Quelladresse | 32 Bit |
| Zieladresse | 32 Bit |
| Serviceklasse | 8 Bit |
| Routennummer | 8 Bit |

In dem erfindungsgemäßen Verfahren verwaltet jeder Netzknoten eine Routing-Tabelle für die bidirektionale Weiterleitung von ankommenden Datenpaketen. Die Routing-Tabelle ordnet einem 4-Tupel aus Adresse des Startknotens, Adresse des Zielknotens, Serviceklasse und Routennummer eine Adresse für den nächsten Hop des Datenpakets zu. Die Adressen von Quell- und Zielknoten werden aus den entsprechenden Feldern des IP-Headers des Datenpakets entnommen. Die Serviceklasse und die Routennummer werden aus dem ToS-Feld des IP-Headers entnommen. Hierzu müssen die beiden Werte in binär kodierter Form gespeichert sein. Die Zuordnung eines an einem Zwischenknoten ankommenden Datenpakets zu einer Route ist erforderlich, da mehrere Routen über einen selben Netzknoten gehen können und somit die Möglichkeit besteht, dass Datenpakete über falsche Nachbarknoten weitergeleitet werden.

Mithilfe des erfindungsgemäßen Verfahrens können Routen, insbesondere Parallelrouten aufgebaut werden, die unter Berücksichtigung der Abstandskorrelation beliebig unabhängig voneinander sind. Hierbei kann stets eine Route, insbesondere Parallelroute, aufgebaut werden, die eine niedrigste Korrelation zu allen anderen aufgebauten Routen hat. Somit ist das erfindungsgemäße Verfahren auch dann in der Lage Routen zu finden, wenn wegen einer beschränkten Topologie des Netzwerks keine Routen zu finden sind, die geforderte Kriterien für eine Korrelation aufweisen.

In dem erfindungsgemäßen Verfahren kann ausgeschlossen werden, dass sich lokale Interferenzen, die eine Dienstgüteverschlechterung für eine Route bedeuten würden, auch auf die Dienstgüte einer oder mehrerer anderen Routen auswirken können. Somit kann die Dienstgüte für eine Verbindung auch dann aufrechterhalten werden, wenn eine oder mehrere Routen, insbesondere Parallelrouten, aufgrund von lokalen Interferenzen ausfallen bzw. sich ihre Dienstgüte verschlechtert.

Durch das erfindungsgemäße Verfahren kann die Korrelation, also der Abstand zweier Routen, insbesondere Parallelrouten, dezentral durch lokalen Informationsaustausch zwischen den Netzknoten berechnet und diese Information für den Routenaufbau berücksichtigt werden. Hierdurch wird ein Overhead durch netzwerkweiten Informationsaustausch vermieden und die Skalierbarkeit wird verbessert.

In dem erfindungsgemäßen Verfahren führen die Netzknoten eine Bewertungsfunktion aus, die in Abhängigkeit von gewichteten Qualitätsmerkmalen die Güte einer Route berechnen kann, so dass diese mit der Güte einer anderen Route vergleichbar ist. Da mit dieser Bewertungsfunktion die Güte einer Route beim Routenaufbau berücksichtigt werden kann, ist über die aufgebaute Route eine bessere Dienstgüte ermöglicht, so dass die Last besser auf das Netzwerk verteilt werden kann.

Das erfindungsgemäße Verfahren ist in der Lage, Routen hinsichtlich beliebiger Qualitätsmerkmale, für die jeweils eine Algebra definiert ist, zu optimieren. Es bewertet lokal empfangene Anfragenachrichten und leitet diese gegebenenfalls weiter, wobei insbesondere auch eine mehrfache Weiterleitung möglich ist. Auf diese Weise können auch solche Routen aufgebaut werden, die zwar länger als die kürzestmöglichen Routen sind, dafür aber, bezogen auf ihre Qualitätsmerkmale, eine bessere Datenübertragung ermöglichen. So können Routen aufgebaut werden, die eine größeren Datendurchsatz und eine geringere Verzögerung im Vergleich zu herkömmlichen Verfahren ermöglichen. Außerdem kann beim Routenaufbau die Lastsituation berücksichtigt werden. Zudem kann in dem erfindungsgemäßen Verfahren durch eine Plausibilitätsprüfung der mitgeführten Qualitätsmerkmale der Anfragenachrichten RREQ beurteilt werden, ob diese von einem jeweiligen Netzknoten bereits weitergeleitet wurden, so dass Routen mit Schleifen vermieden werden können.

Durch die Möglichkeit Datenverkehr im Falle des Auftretens lokaler Störungen oder Netzknotenausfalls auf eine unter Berücksichtigung einer Abstandskorrelation aufgebaute Parallelroute umzuleiten, kann eine Dienstgüteverschlechterung in der Datenübertragung vermieden werden.

Das erfindungsgemäße Verfahren kann L3-Pakete (L3 = Layer 3), d. h. Datenpakete aus Schicht 3 (Vermittlungs- bzw. Netzwerkschicht) des OSI-Schichtenmodells (OSI = Open Systems Interconnection), einer Verbindung zuordnen. Die Dienstgütemerkmale einer Route sind typischer Weise Verbindungsmerkmale von Schicht 1 (Bitübertragungsschicht) und Schicht 2 (Sicherungsschicht) des OSI-Modells. In den Routingnachrichten (Anfragenachricht, Antwortnachricht) des Netzwerkprotokolls sind die Dienstgütemerkmale einer Route in aggregierter oder nichtaggregierter Form in einem Datencontainer mit wenigstens einer Datenstruktur gespeichert. Hierbei kann jedem Netzknoten einer Route eine separate Datenstruktur zugeordnet sein.

In dem dargestellten Verfahren kann die Dienstgüte auf allen aufgebauten Routen kontinuierlich mit Test-Datenpaketen überwacht werden.

Durch das erfindungsgemäße Verfahren werden mehrere parallele Vorwärtsrouten signalisiert, so dass dem Zielknoten mehrere Routen zur Auswahl stehen, wodurch die Routenqualität verbessert wird. Da mehrere Antwortnachrichten RREP vom Zielknoten versendet werden können, können nachträgliche Routenverbesserungen durch in den Zwischenknoten nach bereits erfolgtem Aussenden einer Anfragenachricht RREQ empfangene Anfragenachrichten RREQ berücksichtigt werden.

## Patentansprüche

1. Verfahren zum Aufbau einer Route in einem paketvermittelten Netzwerk aus datentechnisch miteinander verbundenen Netzknoten, die einen Startknoten über Zwischenknoten mit einem Zielknoten verbindet, bei welchem:
- eine Mehrzahl Testrouten mit jeweiligen Dienstgütemerkmalen ermittelt wird,
- für jede Testroute eine Korrelationskenngröße berechnet wird, die eine Abstandskorrelation zu einer im Netzwerk vorhandenen Referenzroute beschreibt;
- eine Bewertungsfunktion zur gewichteten Bewertung von Dienstgütemerkmalen auf wenigstens ein Dienstgütemerkmal der Testrouten angewendet wird, wobei die Korrelationskenngröße als Dienstgütemerkmal im Funktionsargument enthalten ist, wodurch für jede Testroute ein Bewertungsergebnis erhalten wird;
- eine Testroute gemäß einer Auswahlregel für die Bewertungsergebnisse der Testrouten ausgewählt wird;
- die ausgewählte Testroute als Route im Netzwerk eingerichtet wird.

2. Verfahren nach Anspruch 1, bei welchem die Korrelationskenngröße eine maximale Gewichtung innerhalb der Bewertungsfunktion hat.

3. Verfahren nach einem der Ansprüche 1 bis 2, bei welchem die ausgewählte Testroute einen Abstand von mehr als drei Netzknoten-Hops zur Referenzroute hat.

4. Verfahren nach einem der Ansprüche 1 bis 2, bei welchem die ausgewählte Testroute einen maximalen Abstand zur Referenzroute hat.

5. Verfahren zum Aufbau einer Route in einem paketvermittelten Netzwerk aus datentechnisch miteinander verbundenen Netzknoten, welche einen Startknoten (Q) über Zwischenknoten mit einem Zielknoten (Z) verbindet, mit den Schritten:
a) der Startknoten generiert eine Dienstgütemerkmale enthaltende Anfragenachricht (RREQ), die im Broadcast-Verfahren an den Zielknoten gesendet wird, wobei als Dienstgütemerkmal wenigstens eine Korrelationskenngröße enthalten ist, die eine Abstandskorrelation des von der Anfragenachricht zurückgelegten Netzwerkpfads zu einer Referenzroute im Netzwerk beschreibt;
b) wobei jeder Zwischenknoten:
b1) bei erstmaligem Empfang der Anfragenachricht (RREQ) die Anfragenachricht in einem Anfragenachrichtenpufferspeicher speichert und einen ersten Zeitgeber mit einer voreinstellbaren ersten Ablaufzeit (T₁) startet;
b2) während der ersten Ablaufzeit empfangene Anfragenachrichten im Anfragenachrichtenpufferspeicher speichert;
b3) für jede im Anfragenachrichtenpufferspeicher gespeicherte Anfragenachricht deren Dienstgütemerkmale aktualisiert;
b4) eine Bewertungsfunktion zur gewichteten Bewertung von Dienstgütemerkmalen auf wenigstens ein Dienstgütemerkmal der im Anfragenachrichtenpufferspeicher gespeicherten Anfragenachrichten anwendet, wobei die Korrelationskenngröße im Funktionsargument enthalten ist, wodurch für jede Anfragenachricht ein erstes Bewertungsergebnis erhalten wird;
b5)nach Ablauf der ersten Ablaufzeit aus den im Anfragenachrichtenpufferspeicher gespeicherten Anfragenachrichten eine Anfragenachricht gemäß einer ersten Auswahlregel für die ersten Bewertungsergebnisse auswählt;
b6) die ausgewählte Anfragenachricht im Broadcast-Verfahren an benachbarte Netzknoten weiterleitet;
c) wobei der Zielknoten:
c1) bei erstmaligem Empfang der Anfragenachricht (RREQ) die Anfragenachricht in einem Anfragenachrichtenpufferspeicher speichert und einen zweiten Zeitgeber mit einer voreinstellbaren zweiten Ablaufzeit (T₂) startet;
c2) während der zweiten Ablaufzeit empfangene Anfragenachrichten im Anfragenachrichtenpufferspeicher speichert;
c3) für jede im Anfragenachrichtenpufferspeicher gespeicherte Anfragenachricht deren Dienstgütemerkmale aktualisiert;
c4) die Bewertungsfunktion auf wenigstens ein Dienstgütemerkmal der im Anfragenachrichtenpufferspeicher gespeicherten Anfragenachrichten anwendet, wodurch für jede Anfragenachricht ein zweites Bewertungsergebnis erhalten wird;
c5) nach Ablauf der zweiten Ablaufzeit eine Anfragenachricht gemäß einer zweiten Auswahlregel für die zweiten Bewertungsergebnisse auswählt;
c6) eine Dienstgütemerkmale enthaltende Antwortnachricht (RREP) generiert, welche in Rückwärtsrichtung wenigstens teilweise über den von der ausgewählten Anfragenachricht zurückgelegten Netzwerkpfad an den Startknoten gesendet wird, wodurch der Netzwerkpfad als Route eingerichtet wird.

6. Verfahren nach Anspruch 5, bei welchem die Korrelationskenngröße eine maximale Gewichtung innerhalb der Bewertungsfunktion hat.

7. Verfahren nach einem der Ansprüche 5 bis 6, bei welchem durch die erste Auswahlregel eine Anfragenachricht gewählt wird, derart, dass der von der Anfragenachricht zurückgelegte Netzwerkpfad einen Abstand von mehr als drei Netzknoten-Hops zur Referenzroute hat.

8. Verfahren nach einem der Ansprüche 5 bis 6, bei welchem durch die erste Auswahlregel eine Anfragenachricht gewählt wird, derart, dass der von der Anfragenachricht zurückgelegte Netzwerkpfad einen maximalen Abstand zur Referenzroute hat.

9. Verfahren nach einem der Ansprüche 5 bis 8, bei welchem jeder Zwischenknoten:
a1) bei erstmaligem Empfang der Anfragenachricht (RREQ) einen dritten Zeitgeber mit einer voreinstellbaren dritten Ablaufzeit (T₃) startet, wobei die dritte Ablaufzeit nach der ersten Ablaufzeit abläuft,
a2) während des Ablaufs der dritten Ablaufzeit (T₃) empfangene Anfragenachrichten im Anfragenachrichtenpufferspeicher speichert;
a3) für jede im Anfragenachrichtenpufferspeicher gespeicherte Anfragenachricht deren Dienstgütemerkmale aktualisiert;
a4)die Bewertungsfunktion zur gewichteten Bewertung von Dienstgütemerkmalen auf wenigstens ein Dienstgütemerkmal der im Anfragenachrichtenpufferspeicher gespeicherten Anfragenachrichten anwendet, wobei die Korrelationskenngröße im Funktionsargument enthalten ist, wodurch für jede Anfragenachricht ein erstes Bewertungsergebnis erhalten wird;
a5) bei Empfang einer Antwortnachricht prüft, ob eine nach Ablauf der ersten Ablaufzeit und während der dritten Ablaufzeit im Anfragenachrichtenpufferspeicher des Zwischenknotens gespeicherte Anfragenachricht gemäß der ersten Auswahlregel ein besseres Bewertungsergebnis hat als die nach Ablauf der ersten Ablaufzeit weitergeleitete Anfragenachricht;
a6) für den Fall, dass keine besser bewertete Anfragenachricht im Zwischenknoten vorhanden ist, die Antwortnachricht in Rückwärtsrichtung entlang des von der vom Zielknoten ausgewählten Anfragenachricht zurückgelegten Netzwerkpfads weiterleitet;
a7)für den Fall, dass eine besser bewertete Anfragenachricht im Zwischenknoten vorhanden ist, die Antwortnachricht in Rückwärtsrichtung entlang des von der vom Zwischenknoten besser bewerteten Anfragenachricht zurückgelegten Netzwerkpfads weiterleitet.

10. Verfahren nach Anspruch 9, bei welchem eine von einem Zwischenknoten empfangene Antwortnachricht nur dann weitergeleitet wird, falls die dritte Ablaufzeit noch nicht abgelaufen ist.

11. Verfahren zum Aufbau einer Route in einem paketvermittelten Netzwerk aus datentechnisch miteinander verbundenen Netzknoten, welche einen Startknoten über Zwischenknoten mit einem Zielknoten verbindet, mit den Schritten:
a) der Startknoten generiert eine Dienstgütemerkmale enthaltende Anfragenachricht (RREQ), die im Broadcast-Verfahren an den Zielknoten gesendet wird, wobei als Dienstgütemerkmal wenigstens eine Korrelationskenngröße enthalten ist, die eine Abstandskorrelation des von der Anfragenachricht zurückgelegten Netzwerkpfads zu einer Referenzroute im Netzwerk beschreibt;
b) wobei jeder eine Anfragenachricht empfangende Zwischenknoten:
b1) bei erstmaligem Empfang der Anfragenachricht (RREQ) die Anfragenachricht in einem Anfragenachrichtenpufferspeicher speichert und einen ersten Zeitgeber mit einer voreinstellbaren ersten Ablaufzeit (T₁) sowie einen dritten Zeitgeber mit einer voreinstellbaren dritten Ablaufzeit (T₃)startet;
b2) während der ersten Ablaufzeit und während der dritten Ablaufzeit empfangene Anfragenachrichten im Anfragenachrichtenpufferspeicher speichert;
b3)für jede im Anfragenachrichtenpufferspeicher gespeicherte Anfragenachricht deren Dienstgütemerkmale aktualisiert;
b4) eine Bewertungsfunktion zur gewichteten Bewertung von Dienstgütemerkmalen auf wenigstens ein Dienstgütemerkmal der im Anfragenachrichtenpufferspeicher gespeicherten Anfragenachrichten anwendet, wobei die Korrelationskenngröße im Funktionsargument enthalten ist, wodurch für jede Anfragenachricht ein erstes Bewertungsergebnis erhalten wird;
b5) nach Ablauf der ersten Ablaufzeit aus den während der ersten Ablaufzeit im Anfragenachrichtenpufferspeicher gespeicherten Anfragenachrichten eine Anfragenachricht gemäß einer ersten Auswahlregel für die ersten Bewertungsergebnisse auswählt;
b6) die ausgewählte Anfragenachricht im Broadcast-
Verfahren an benachbarte Netzknoten weiterleitet;
c) wobei der Zielknoten:
c1) bei erstmaligem Empfang der Anfragenachricht (RREQ) die Anfragenachricht in einem Anfragenachrichtenpufferspeicher speichert und einen zweiten Zeitgeber mit einer voreinstellbaren zweiten Ablaufzeit (T₂) startet;
c2) während der zweiten Ablaufzeit empfangene Anfragenachrichten im Anfragenachrichtenpufferspeicher speichert;
c3) für jede im Anfragenachrichtenpufferspeicher gespeicherte Anfragenachricht deren Dienstgütemerkmale aktualisiert;
c4) die Bewertungsfunktion auf wenigstens ein Dienstgütemerkmal der im Anfragenachrichtenpufferspeicher gespeicherten Anfragenachrichten anwendet, wodurch für jede Anfragenachricht ein zweites Bewertungsergebnis erhalten wird;
c5) nach Ablauf der zweiten Ablaufzeit eine Mehrzahl Anfragenachrichten gemäß einer zweiten Auswahlregel für die zweiten Bewertungsergebnisse auswählt;
c6) eine Dienstgütemerkmale enthaltende Antwortnachricht (RREP) generiert, welche in Rückwärtsrichtung wenigstens teilweise jeweils über die von den ausgewählten Anfragenachrichten zurückgelegten Netzwerkpfade an den Startknoten gesendet wird;
d) wobei jeder eine Antwortnachricht empfangende Zwischenknoten:
d1) bei Empfang einer Antwortnachricht prüft, ob eine nach Ablauf der ersten Ablaufzeit und während der dritten Ablaufzeit im Anfragenachrichtenpufferspeicher des Zwischenknotens gespeicherte Anfragenachricht gemäß der ersten Auswahlregel ein besseres Bewertungsergebnis hat als die nach Ablauf der ersten Ablaufzeit weitergeleitete Anfragenachricht;
d2) für den Fall, dass im Zwischenknoten keine besser bewertete Anfragenachricht vorhanden ist, die Antwortnachricht in Rückwärtsrichtung entlang des von der vom Zielknoten ausgewählten Anfragenachricht zurückgelegten Netzwerkpfads weiterleitet;
d3) für den Fall, dass im Zwischenknoten eine besser bewertete Anfragenachricht vorhanden ist, die Antwortnachricht in Rückwärtsrichtung entlang des von der vom Zwischenknoten besser bewerteten Anfragenachricht zurückgelegten Netzwerkpfads weiterleitet;
e) wobei der Startknoten:
e1) bei erstmaligem Empfang der Antwortnachricht (RREP) die Anfragenachricht in einem Antwortnachrichtenpufferspeicher speichert und einen vierten Zeitgeber mit einer voreinstellbaren vierten Ablaufzeit (T₄) startet;
e2) während der vierten Ablaufzeit empfangene Antwortnachrichten im Antwortnachrichtenpufferspeicher speichert;
e3) für jede im Antwortnachrichtenpufferspeicher gespeicherte Antwortnachricht die Dienstgütemerkmale des zurückgelegten Netzwerkpfads aktualisiert;
e4) die Bewertungsfunktion auf wenigstens ein Dienstgütemerkmal der im Antwortnachrichtenpufferspeicher gespeicherten Antwortnachrichten anwendet, wodurch für jeden Netzwerkpfad ein drittes Bewertungsergebnis erhalten wird;
e5) nach Ablauf der vierten Ablaufzeit eine Antwortnachricht gemäß einer dritten Auswahlregel für die Bewertungsergebnisse auswählt;
e6) ein Datenpaket in Vorwärtsrichtung über den durch die ausgewählte Antwortnachricht zurückgelegten Netzwerkpfad an den Zielknoten sendet, wodurch die Route eingerichtet wird.

12. Verfahren nach Anspruch 11, bei welchem der Startknoten eine Bestätigungsnachricht generiert, welche an den Zielknoten gesendet wird, wodurch die Route eingerichtet wird.

13. Verfahren nach einem der Ansprüche 11 bis 12, bei welchem die Korrelationskenngröße eine maximale Gewichtung innerhalb der Bewertungsfunktion hat.

14. Verfahren nach einem der Ansprüche 11 bis 13, bei welchem durch die erste Auswahlregel eine Anfragenachricht gewählt wird, derart, dass der von der Anfragenachricht zurückgelegte Netzwerkpfad stets einen Abstand von mehr als drei Netzknoten-Hops zur Referenzroute hat.

15. Verfahren nach einem der Ansprüche 11 bis 13, bei welchem durch die erste Auswahlregel eine Anfragenachricht gewählt wird, derart, dass der von der Anfragenachricht zurückgelegte Netzwerkpfad einen maximalen Abstand zur Referenzroute hat.

16. Verfahren nach einem der Ansprüche 11 bis 15, bei welchem durch die zweite Auswahlregel Anfragenachrichten ausgewählt werden, derart, dass die zurückgelegten Netzwerkpfade der ausgewählten Anfragenachrichten stets einen Abstand von mehr als drei Netzknoten-Hops zur Referenzroute haben.

17. Verfahren nach einem der Ansprüche 11 bis 15, bei welchem durch die zweite Auswahlregel Anfragenachrichten ausgewählt werden, derart, dass die zurückgelegten Netzwerkpfade der ausgewählten Anfragenachrichten, beginnend mit jenem Netzwerkpfad, der einen maximalen Abstand zur Referenzroute hat, einen sukzessiv abnehmenden Abstand zur Referenzroute haben.

18. Verfahren nach einem der Ansprüche 11 bis 17, bei welchem durch die dritte Auswahlregel eine Antwortnachricht gewählt wird, derart, dass der von der Antwortnachricht zurückgelegte Netzwerkpfad einen Abstand von mehr als drei Netzknoten-Hops zur Referenzroute hat.

19. Verfahren nach einem der Ansprüche 11 bis 17, bei welchem durch die dritte Auswahlregel eine Antwortnachricht gewählt wird, derart, dass der von der Antwortnachricht zurückgelegte Netzwerkpfad einen maximalen Abstand zur Referenzroute hat.

20. Verfahren nach einem der Ansprüche 11 bis 19, bei welchem eine von einem Zwischenknoten empfangene Antwortnachricht nur dann weitergeleitet wird, falls die dritte Ablaufzeit noch nicht abgelaufen ist.

21. Verfahren nach einem der Ansprüche 1 bis 20, bei welchem eine zur Referenzroute parallele Route aufgebaut wird.

22. Verfahren nach einem der Ansprüche 1 bis 21, bei welchem jeder Netzknoten mit anderen Netzknoten Routeninformationsnachrichten austauscht, wobei in jeder Routeninformationsnachricht Daten enthalten sind, welche beschreiben, ob ein die Routeninformationsnachricht sendender Netzknoten Teil der Referenzroute ist.

23. . Verfahren nach Anspruch 22, bei welchem in jeder Routeninformationsnachricht Daten enthalten sind, welche beschreiben, ob ein zu dem die Routeninformationsnachricht sendenden Netzknoten benachbarter Netzknoten Teil der Referenzroute ist.

24. Verfahren nach Anspruch 22, bei welchem in jeder Routeninformationsnachricht Daten enthalten sind, welche beschreiben, ob ein zu dem die Routeninformationsnachricht sendenden Netzknoten innerhalb einer 1-Hop-, 2-Hop- oder 3-Hop-Nachbarschaft benachbarter Netzknoten Teil der Referenzroute ist.

25. Netzwerk aus datentechnisch miteinander verbundenen Netzknoten, dessen Netzknoten zur Durchführung eines Verfahrens nach einem der Ansprüche 1 bis 4 und 21 bis 24 geeignet eingerichtet sind.

26. Netzknoten eines Netzwerks aus datentechnisch miteinander verbundenen Netzknoten, welcher zur Durchführung eines Verfahrens nach einem der Ansprüche 1 bis 4 und 21 bis 24 geeignet eingerichtet ist.

27. Netzwerk aus datentechnisch miteinander verbundenen Netzknoten, dessen Netzknoten zur Durchführung eines Verfahrens nach einem der Ansprüche 5 bis 10 und 21 bis 24 geeignet eingerichtet sind.

28. Netzknoten eines Netzwerks aus datentechnisch miteinander verbundenen Netzknoten, welcher zur Durchführung eines Verfahrens nach einem der Ansprüche 5 bis 10 und 21 bis 24 geeignet eingerichtet ist.

29. Netzwerk aus datentechnisch miteinander verbundenen Netzknoten, dessen Netzknoten zur Durchführung eines Verfahrens nach einem der Ansprüche 11 bis 24 geeignet eingerichtet sind.

30. . Netzknoten eines Netzwerks aus datentechnisch miteinander verbundenen Netzknoten, welcher zur Durchführung eines Verfahrens nach einem der Ansprüche 11 bis 24 geeignet eingerichtet ist.
